# EUROPEAN PATENT SPECIFICATION

(11) **EP 4 424 614 B1**
(45) Date of publication and mention of the grant of the patent: **18.11.2026**
(21) Application number: 22885566.4
(22) Date of filing: 28.09.2022
(51) Int. Cl.: B65G 1/04, B65G 1/10, B65G 1/137, G06Q 10/08

(54) **WAREHOUSE DISPATCHING SYSTEM AND METHOD**
SYSTEM UND VERFAHREN ZUM VERSENDEN VON LAGERHÄUSERN
SYSTÈME ET PROCÉDÉ DE RÉPARTITION D'ENTREPÔT

(30) Priority: 26.10.2021 CN 202111250791; 26.10.2021 CN 202122588751 U; 15.06.2022 CN 202221496414 U
(43) Date of publication of application: 04.09.2024
(73) Proprietor: Beijing Geekplus Technology Co., Ltd., Chaoyang District Beijing 100102 (CN)
(72) Inventor: LI, Hongbo, Beijing 100102 (CN); XING, Zhiwei, Beijing 100102 (CN)
(74) Representative: Habermann, Hruschka & Schnabel
(86) International application number: PCT/CN2022/122067
(87) International publication number: WO 2023/071681

(56) References cited:
- EP-A1- 3 653 541
- EP-A1- 3 859 626
- EP-A1- 3 872 009
- CN-A- 110 949 923
- CN-A- 111 960 015
- CN-A- 112 046 990
- CN-U- 214 421 445
- CN-U- 216 188 184
- KR-A- 20210 098 539
- US-A1- 2018 043 547

## Description

### TECHNICAL FIELD

This application relates to the field of warehouse technologies, and in particular, to a warehouse scheduling system and method.

### BACKGROUND

With the rapid development of e-commerce, e-commerce plays an increasingly important role in consumers' lives. The number of user orders grows exponentially year by year. In the meantime, e-commerce becomes increasingly mature, users have raised increasingly high requirements for the quality of service of e-commerce, and a processing capability of warehouse management is put to a severe test.

With the rapid development of e-commerce, a warehouse needs to store a massive stock of commodities of a great many types. To be specific, the warehouse needs to quickly complete order picking, and a commodity stock of the warehouse needs to be increased, to improve the storage efficiency of the entire warehouse. To improve storage efficiency of a warehouse, during planning, the warehouse is usually divided into storage areas for storing a huge stock of commodities and picking areas for commodity picking in a "goods to person" mode. However, for a warehouse with a fixed area, storage efficiency of a storage area and picking efficiency of a picking area cannot be pursued simultaneously. Once the storage area is increased in size, the size of the picking area is relatively reduced. Although the storage efficiency of commodities in the storage area is improved, the reduction in the size of the picking area affects the picking efficiency. In contrast, once the size of the picking area is increased, the size of the storage area is correspondingly reduced. Although the picking efficiency of the picking area is improved, the reduction in the size of the storage area also affects the storage efficiency of the storage area. That is, existing technologies cannot achieve a balance between picking efficiency and storage efficiency of a warehouse.

European patent specification EP3872009A1 discloses an inventory region integrating goods preparation and picking, and an inventory management system and method. The inventory region includes: a plurality of high-level shelves and a plurality of picking shelves, any high-level shelf of the plurality of high-level shelves includes at least one shelf board, and the at least one shelf board partitions the high-level shelf into at least two levels; and a picking shelf is placed at a bottom level of at least one high-level shelf of the plurality of high-level shelves, and at least one storage container is placed on each of the other floors except for the bottom level where the picking shelf is placed.

European patent specification EP3859626A1 discloses a warehousing management system and method. The system includes: a control server, an inventory container, an access device, a temporary container, a workstation and a carrying device. The control server is configured to, in response to a current task, determine a first target inventory container in which a target storage container hit by the current task is located, a first target access device, a target temporary container, a target workstation, and a first target carrying device, and control the first target access device to take out the target storage container from the first target inventory container, carry and store the target storage container to the target temporary container; and control the first target carrying device to move the target temporary container to the target workstation for operation.

U.S. patent specification US20180043547A1 discloses a collaborative inventory monitoring. The method involves determining a target inventory item having a target on-item identifier. The method also involves determining that a first inventory item having a first on-item identifier is loaded onto a first robotic device. The method further involves transmitting a request to verify the first on-item identifier. The method still further involves receiving data captured by a sensor of the second robotic device.

### SUMMARY

In view of this, embodiments of this application provide a warehouse scheduling system and method, to resolve technical deficiencies in existing technologies. The present invention is set out in the appended set of claims. Any references to inventions or embodiments not falling within the scope of the independent claims are to be interpreted as examples useful for understanding the invention.

According to a first aspect of embodiments of this application, a warehouse scheduling system is provided. The system includes a control server, a carrying device, an inventory area, and a container handling device, the inventory area at least includes a plurality of movable carriers, each movable carrier includes at least one storage position, and each storage position may accommodate at least one container.

The control server is configured to: determine a first target container on a first target movable carrier and a current storage position and a target position of the first target container, determine a first target carrying device used for carrying the first target movable carrier and a target container handling device, send a carrying instruction to the first target carrying device, and send a handling instruction to the target container handling device.

The first target carrying device is configured to carry the first target movable carrier on which the first target container is placed to a destination in response to the carrying instruction.

The target container handling device is located at the destination, and is configured to, in response to the handling instruction, take out the first target container from the current storage position and place the first target container at the target position.

According to a second aspect of embodiments of this application, a warehouse scheduling system is provided. The system includes a control server, an access device, a carrying device, an inventory area, and a container handling device, the inventory area at least includes a plurality of fixed shelving units and a plurality of movable carriers, each fixed shelving unit includes at least one partition, the at least one partition divides the fixed shelving unit into at least two layers, each movable carrier is located in a bottom layer of the fixed shelving unit, at least one storage position is disposed at the partition of the fixed shelving unit, and each storage position may accommodate at least one container; and the movable carrier includes at least one storage position, and each storage position may accommodate at least one container.

The control server is configured to: determine, according to an order task, a target fixed shelving unit on which a target container that accommodates an order good is currently located and a target movable carrier onto which the target container is about to be placed, where the target movable carrier has a storage position used for allowing the target container to be placed thereon, determine a target access device used for accessing the target container, a target carrying device used for carrying the target movable carrier, and a target cargo box handling device used for handling a target cargo box, send an access instruction to the target access device, send a carrying instruction to the target carrying device, and send a handling instruction to the target cargo box handling device.

The target access device is configured to, in response to the access instruction, move to the target fixed shelving unit, and take out the target container from the target fixed shelving unit and place the target container at a storage position in the target movable carrier or take out the target container from a storage position in the target movable carrier and place the target container at a storage position in the target fixed shelving unit.

The target carrying device is configured to carry the target movable carrier on which the target container is placed to a destination in response to the carrying instruction.

The target container handling device is located at the destination, and is configured to, in response to the handling instruction, take out a target container from the target movable carrier carried by the target carrying device or place a target container on the target movable carrier carried by the target carrying device.

According to a third aspect of embodiments of this application, a warehouse scheduling method is provided. The method is applied to a warehouse scheduling system, the system includes a control server, a carrying device, an inventory area, and a container handling device, the inventory area at least includes a plurality of movable carriers, each movable carrier includes at least one storage position, and each storage position may accommodate at least one container.

The method includes:
determining, by the control server, a first target container on a first target movable carrier and a current storage position and a target position of the first target container, determining, by the control server, a first target carrying device used for carrying the first target movable carrier and a target container handling device, sending, by the control server, a carrying instruction to the first target carrying device, and sending, by the control server, a handling instruction to the target container handling device;
carrying, by the first target carrying device, the first target movable carrier on which the first target container is placed to a destination in response to the carrying instruction; and
in response to the handling instruction, taking out, by the target container handling device located at the destination, the first target container from the current storage position and placing, by the target container handling device, the first target container at the target position.

According to a fourth aspect of embodiments of this application, a warehouse scheduling method is provided. The method is applied to a warehouse scheduling system. The system includes a control server, an access device, a carrying device, an inventory area, and a container handling device, the inventory area at least includes a plurality of fixed shelving units and a plurality of movable carriers, each fixed shelving unit includes at least one partition, the at least one partition divides the fixed shelving unit into at least two layers, each movable carrier is located in a bottom layer of the fixed shelving unit, at least one storage position is disposed at the partition of the fixed shelving unit, and each storage position may accommodate at least one container; and the movable carrier includes at least one storage position, and each storage position may accommodate at least one container.

The method includes:
determining, by the control server according to an order task, a target fixed shelving unit on which a target container that accommodates an order good is currently located and a target movable carrier onto which the target container is about to be placed, where the target movable carrier has a storage position used for allowing the target container to be placed thereon, determining, by the control server, a target access device used for accessing the target container, a target carrying device used for carrying the target movable carrier, and a target cargo box handling device used for handling a target cargo box, sending, by the control server, an access instruction to the target access device, sending, by the control server, a carrying instruction to the target carrying device, and sending, by the control server, a handling instruction to the target cargo box handling device;
in response to the access instruction, moving, by the target access device, to the target fixed shelving unit, and taking out, by the target access device, the target container from the target fixed shelving unit and placing, by the target access device, the target container at a storage position in the target movable carrier or taking out, by the target access device, the target container from a storage position in the target movable carrier and placing, by the target access device, the target container at a storage position in the target fixed shelving unit;
carrying, by the target carrying device, the target movable carrier on which the target container is placed to a destination in response to the carrying instruction; and
in response to the handling instruction, taking out, by the target container handling device located at the destination, a target container from the target movable carrier carried by the target carrying device or placing, by the target container handling device, a target container on the target movable carrier carried by the target carrying device.

According to a fifth aspect of embodiments of this application, a warehouse scheduling system is provided. The system includes: a movable carrier;
a fixed shelving unit, where the fixed shelving unit and a bearing surface bearing the fixed shelving unit jointly define an accommodating area, and the accommodating area is constructed to accommodate the movable carrier;
an access device, configured to carry a container between the fixed shelving unit and the movable carrier; and
a first target carrying device, configured to: carry a container away from the movable carrier or carry a container onto the movable carrier; and/or, carry the movable carrier away from the accommodating area or carry the movable carrier into the accommodating area.

The embodiments provide a warehouse scheduling system and method. The system includes a control server, a carrying device, an inventory area, and a container handling device. The inventory area at least includes a plurality of movable carriers, the movable carrier includes at least one storage position, and each storage position may accommodate at least one container. The control server is configured to: determine a first target container on a first target movable carrier and a current storage position and a target position of the first target container, determine a first target carrying device used for carrying the first target movable carrier and a target container handling device, send a carrying instruction to the first target carrying device, and send a handling instruction to the target container handling device. The first target carrying device is configured to carry the first target movable carrier on which the first target container is placed to a destination in response to the carrying instruction. The target container handling device is located at the destination, and is configured to, in response to the handling instruction, take out the first target container from the current storage position and place the first target container at the target position. In the warehouse scheduling system in the embodiments of this application, dense-storage movable shelving units are provided, and container access devices are disposed at workstations. Through the dense-storage movable shelving units and the container access devices for operating containers on the movable shelving units, space utilization of an inventory area is improved, to allow the inventory area to store more goods, so that costs in the entire warehouse scheduling system are reduced.

### BRIEF DESCRIPTION OF THE DRAWINGS

FIG. 1 is a schematic diagram of a system structure of a warehouse scheduling system according to an embodiment of this application;
FIG. 2 is a schematic diagram of a dense-storage movable shelving unit according to an embodiment of this application;
FIG. 3 is a schematic diagram of a system structure of a warehouse scheduling system according to another embodiment of this application;
FIG. 4 is a front view of an inventory support according to an embodiment of this application;
FIG. 5 is a side view of an inventory support according to an embodiment of this application;
FIG. 6 is a schematic diagram of a movable shelving unit including a connection layer according to an embodiment of this application;
FIG. 7a is a schematic diagram of a container handling device according to an embodiment of this application;
FIG. 7b is a schematic diagram of a first mixed goods carrier according to an embodiment of this application;
FIG. 8 is a schematic diagram of a second mixed goods carrier according to an embodiment of this application;
FIG. 9 is a schematic diagram of a third mixed goods carrier according to an embodiment of this application;
FIG. 10 is a schematic diagram of a fourth mixed goods carrier according to an embodiment of this application;
FIG. 11 is a flowchart of a warehouse scheduling method according to an embodiment of this application;
FIG. 12 is a flowchart of a warehouse scheduling method according to another embodiment of this application;
FIG. 13 is a schematic structural diagram of a warehouse scheduling system according to another embodiment of this application;
FIG. 14 is a three-dimensional schematic diagram when a first target carrying device carries a first container according to an embodiment of this application;
FIG. 15 is a schematic structural diagram of a fixed shelving unit according to an embodiment of this application;
FIG. 16 is a three-dimensional schematic diagram of a fixed shelving unit and a movable carrier bear a first container and a second container according to an embodiment of this application;
FIG. 17 is a schematic structural diagram of a movable carrier according to an embodiment of this application;
FIG. 18 is a three-dimensional schematic diagram of a movable carrier bear a first container and a second container according to an embodiment of this application;
FIG. 19 is a three-dimensional schematic diagram when a first target carrying device carries a second container according to an embodiment of this application;
FIG. 20 is a three-dimensional schematic diagram when an access device carries a first container according to an embodiment of this application;
FIG. 21 is a three-dimensional schematic diagram when an access device carries a second container according to an embodiment of this application;
FIG. 22 is a three-dimensional schematic diagram when a first target carrying device carries a movable carrier according to an embodiment of this application; and
FIG. 23 is a three-dimensional schematic diagram when a first target carrying device carries a movable carrier, a first container, and a second container according to an embodiment of this application.

### Reference numerals:

110-control server, 111-processor, 112-memory, 113-order pool, 114-operating workstation, 120-inventory area, 130-inventory support, 1301-fixed shelving unit, 1302-movable carrier, 13021-vertical column, 13022-laminate, 130201-connection layer, 130202-non-connection layer, 1304-mixed movable carrier, 130401-first storage position, 130402-cell, 130403-second storage position, 140-access device, 150-carrying device, 160-workstation, 170-container handling device, 7-shelf body, 71-X-axis track, 72-Y-axis track, 2-access container assembly, 11-first support, 12-comb tooth member, 13-first laminate, 21-accommodating area, 22-second support, 23-second laminate, 31-first body, 32-telescopic fork, 33-walking mechanism, 51-first container; and 52-second container.

### DETAILED DESCRIPTION

Many specific details are set forth in the following description to facilitate a full understanding of this application.

However, this application is capable of being implemented in many other ways than those described herein, and a person skilled in the art may similarly generalize the application without violating the connotations of this application, and thus this application is not limited by the specific implementations disclosed below.

The terms used in one or more embodiments of this application are merely used to describe the embodiments but are not intended to limit one or more embodiments of this application. The "a" and "the" in a singular form used in one or more embodiments of this application and the appended claims are also intended to include a plural form, unless other meanings are clearly indicated in the context. It should be further understood that the term "and/or" used in one or more embodiments of this application indicates and includes any or all possible combinations of one or more associated listed items.

It should be understood that although the terms "first," "second," and the like may be used to describe various information in one or more embodiments of this application, such information should not be limited to these terms. These terms are merely used to distinguish between information of the same type. For example, without departing from the scope of one or more embodiments of this application, "first" may also be referred to as "second". Similarly, "second" may also be referred to as "first". Depending on the context, for example, the term "if" used herein may be interpreted as "while" or "when," or "in response to determination."

In this application, a warehouse scheduling system and method are provided, and are described in detail one by one in the following embodiments.

In a specific implementation provided in this application, the system includes a control server, a carrying device, an inventory area, and an article handling device, the inventory area at least includes a plurality of movable carriers, each movable carrier includes at least one storage position, and each storage position may accommodate at least one article,
the control server is configured to: determine a first target article on a first target movable shelving unit, determine a current storage position and a target position of the first target article, determine a first target carrying device used for carrying the first target movable shelving unit and a target article handling device, send a carrying instruction to the first target carrying device, and send a handling instruction to the target article handling device;
the target carrying device is configured to carry the first target movable shelving unit, that is, a workstation, on which the first target article is placed to a destination in response to the carrying instruction; and
the target article handling device is located at the destination (workstation), and is configured to, in response to the handling instruction, take out the first target article from the current storage position and place the first target article at the target position.

The target position is a storage position in a first target movable carrier or a storage position in another movable carrier other than the first target movable carrier. That is, after taking out the first target article from the current storage position, the target article handling device may further place the first target article at the storage position in the first target movable carrier, or place the first target article at the storage position in the another movable carrier.

In another specific implementation provided in this application, the article that the storage position may accommodate includes a container, and the control server is further configured to determine a new storage position for a first target container according to any one selected from the group consisting of popularity of a good stored in the first target container, a degree of correlation between the good stored in the first target container and a good stored in another container, whether a to-be-processed task involves the good stored in the first target container, and distances between a target container handling device and storage positions in movable carriers located at a destination.

In another specific implementation provided in this application, the control server is further configured to determine a new storage position for the first target article in response to at least one selected from the group consisting of a take-off task, a sorting task, and a put-on task.

In another specific implementation provided in this application, the system further includes an access device and a plurality of fixed shelving units, each fixed shelving unit includes at least one partition, the at least one partition divides the fixed shelving unit into at least two layers, the movable carrier is located in a bottom one among the at least two layers of the fixed shelving unit, at least one storage position is disposed at the partition of the fixed shelving unit, and each storage position may accommodate at least one article.

In another specific implementation provided in this application, the article handling device includes a shelf body, the shelf body is provided with an article access assembly and a bearing assembly, and the article access assembly is configured to move on the shelf body; the shelf body includes an X-axis track and a Y-axis track that are perpendicular to each other; the Y-axis track is constructed to move along the X-axis track, and the article access assembly is constructed to move along the Y-axis track; and the article access assembly may take out an article from a carrier in a Z-axis direction and load the article onto the bearing assembly or unload an article from the bearing assembly and place the article on the movable carrier.

In another specific implementation provided in this application, the system includes a control server, an access device, a carrying device, an inventory area, and an article handling device, the inventory area at least includes a plurality of fixed shelving units and a plurality of movable carriers, each fixed shelving unit includes at least one partition, the at least one partition divides the fixed shelving unit into at least two layers, each movable carrier is located in a bottom layer of the fixed shelving unit, at least one storage position is disposed at the partition of the fixed shelving unit, and each storage position may accommodate at least one article; and the movable carrier includes at least one storage position, each storage position may accommodate at least one article, and the article that the storage position may accommodate includes a container;
the control server is configured to: determine, according to an order task, a target fixed shelving unit on which a target container that accommodates an order good is currently located and a target movable carrier onto which the target container is about to be placed, where the target movable carrier has a storage position used for allowing the target container to be placed thereon, determine a target access device used for accessing the target container, a target carrying device used for carrying the target movable carrier, and a target cargo box handling device used for handling a target cargo box, send an access instruction to the target access device, send a carrying instruction to the target carrying device, and send a handling instruction to the target cargo box handling device;
the target access device is configured to, in response to the access instruction, move to the target fixed shelving unit, and take out the target container from the target fixed shelving unit and place the target container at a storage position in the target movable carrier or take out the target container from a storage position in the target movable carrier and place the target container at a storage position in the target fixed shelving unit;
the target carrying device is configured to carry the target movable carrier on which the target container is placed to a destination in response to the carrying instruction; and
the target container handling device is located at the destination, and is configured to, in response to the handling instruction, take out a target container from the target movable carrier carried by the target carrying device or place a target container on the target movable carrier carried by the target carrying device.

In another specific implementation provided in this application, the article that the storage position may accommodate includes a container, the movable carrier is a mixed movable carrier, the mixed movable carrier may bear at least two of a first container that may accommodate a warehouse good, a second container that may accommodate a warehouse good, and a stored good.

In another specific implementation provided in this application, a warehouse scheduling method is further provided, and is applied to a warehouse scheduling system. The system includes a control server, a carrying device, an inventory area, and an article handling device, the inventory area at least includes a plurality of movable carriers, each movable carrier includes at least one storage position, and each storage position may accommodate at least one article.

The method includes:
determining, by the control server, a first target article on a first target movable carrier and a current storage position and a target position of the first target article, determining, by the control server, a first target carrying device used for carrying the first target movable carrier and a target article handling device, sending, by the control server, a carrying instruction to the first target carrying device, and sending, by the control server, a handling instruction to the target article handling device;
carrying, by the first target carrying device, the first target movable carrier on which the first target article is placed to a destination in response to the carrying instruction; and
in response to the handling instruction, taking out, by the target article handling device located at the destination, the first target article from the current storage position and placing, by the target article handling device, the first target article at the target position.

In another specific implementation provided in this application, the article that the storage position may accommodate includes a container, and the method further includes:
determining, by the control server, a new storage position for a first target container according to any one selected from the group consisting of popularity of a good stored in the first target container, a degree of correlation between the good stored in the first target container and a good stored in another container, whether a to-be-processed task involves the good stored in the first target container, and distances between a target container handling device and storage positions in movable carriers located at a destination.

In another specific implementation provided in this application, a warehouse scheduling method is further provided, and is applied to a warehouse scheduling system. The system includes a control server, an access device, a carrying device, an inventory area, and an article handling device, the inventory area at least includes a plurality of fixed shelving units and a plurality of movable carriers, each fixed shelving unit includes at least one partition, the at least one partition divides the fixed shelving unit into at least two layers, each movable carrier is located in a bottom layer of the fixed shelving unit, at least one storage position is disposed at the partition of the fixed shelving unit, and each storage position may accommodate at least one article; and the movable carrier includes at least one storage position, each storage position may accommodate at least one article, and the article that the storage position may accommodate includes a container;

The method includes:
determining, by the control server according to an order task, a target fixed shelving unit on which a target container that accommodates an order good is currently located and a target movable carrier onto which the target container is about to be placed, where the target movable carrier has a storage position used for allowing the target container to be placed thereon, determining, by the control server, a target access device used for accessing the target container, a target carrying device used for carrying the target movable carrier, and a target cargo box handling device used for handling a target cargo box, sending, by the control server, an access instruction to the target access device, sending, by the control server, a carrying instruction to the target carrying device, and sending, by the control server, a handling instruction to the target cargo box handling device;
in response to the access instruction, moving, by the target access device, to the target fixed shelving unit, and taking out, by the target access device, the target container from the target fixed shelving unit and placing, by the target access device, the target container at a storage position in the target movable carrier or taking out, by the target access device, the target container from a storage position in the target movable carrier and placing, by the target access device, the target container at a storage position in the target fixed shelving unit;
carrying, by the target carrying device, the target movable carrier on which the target container is placed to a destination in response to the carrying instruction; and
in response to the handling instruction, taking out, by the target container handling device located at the destination, a target container from the target movable carrier carried by the target carrying device or placing, by the target container handling device, a target container on the target movable carrier carried by the target carrying device.

In another specific implementation provided in this application, a warehouse scheduling system is provided. The system includes:
a movable carrier;
a fixed shelving unit, where the fixed shelving unit and a bearing surface bearing the fixed shelving unit jointly define an accommodating area, and the accommodating area is constructed to accommodate the movable carrier;
an access device, configured to carry an article between the fixed shelving unit and the movable carrier; and
a first target carrying device, configured to: carry an article away from the movable carrier or carry an article onto the movable carrier; and/or, carry the movable carrier away from the accommodating area or carry the movable carrier into the accommodating area.

It is to be noted that, the storage position in the movable carrier in the foregoing embodiments may accommodate at least one article. The article may include a container or goods. A first target article may include a first target container, a second target article may include a second target container, and a third target article may include a third target container. In addition, a target article handling device may be used for handling a container or goods. An article access assembly is further mentioned in the embodiments. The article access assembly may be used for accessing a container or goods. This is not specifically limited in this embodiment.

In addition, for ease of understanding, a process of a warehouse scheduling system is described in detail in the following embodiments by using an example in which an article is described as a container. An article handling device is described as a container handling device, an article access assembly is described as a container access assembly, and the handling an article and accessing an article are respectively described as handling a container and accessing a container.

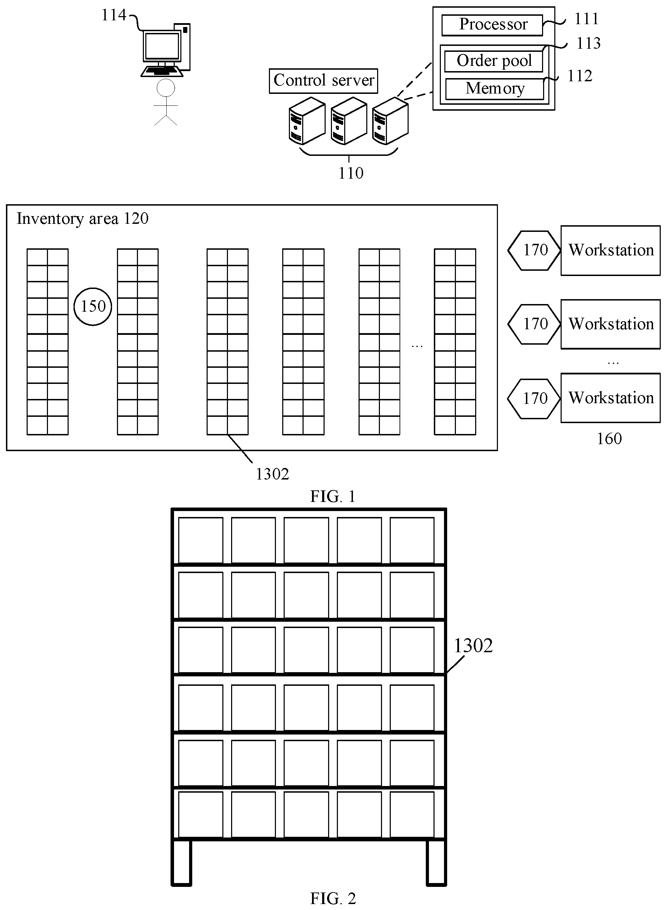

FIG. 1 is a schematic diagram of a system structure of a warehouse scheduling system according to an embodiment of this application. The system includes one or more control servers 110, an inventory area 120, and a container handling device 170. The inventory area includes a plurality of movable carriers 1302, a channel is formed between the plurality of movable carriers 1302, one or more carrying devices 150 run in the channel, a plurality of workstations 160 are disposed outside the inventory area, and the container handling device 170 is disposed at each workstation.

The control server 110 is connected to the carrying device 150 and the container handling device 170 by wireless communication. A worker operates the control server 110 through an operating workstation 114 to work. The control server 110 is a software system that runs on a server and has a data storage capability and an information processing capability, and may be wirelessly connected to software systems or the like of the carrying device 150, the container handling device 170, and the workstation 160. The control server 110 may include one or more servers, and may have a centralized control architecture or a distributed computing architecture. The control server 110 has a processor 111 and a memory 112. The memory 112 may have an order pool 113. The order pool 113 stores order information.

The inventory area 120 may be a dense storage area or may be a non-dense storage area. The plurality of movable carriers 1302 are disposed in the inventory area 120. The movable carrier includes, but is not limited to, a partition shelving unit, a cargo box shelving unit, a picking shelving unit, a tray, a movable shelving unit, a mobile container, a pallet support, or the like.

The movable carrier 1302 may be a movable shelving unit 1302, the movable shelving unit 1302 includes at least one laminate, the at least one laminate divides the movable shelving unit 1302 into at least two layers, at least one storage position is disposed on the laminate of the movable shelving unit 1302, each storage position may accommodate at least one container, and the container may be a cargo box.

A channel is formed between a plurality of movable shelving units 1302 of the inventory area 120, the carrying device 150 runs in the channel, and the carrying device 150 is used for carrying the movable shelving unit 1302. Specifically, the carrying device 150 includes a shelving unit carrying robot.

The movable shelving unit 1302 may be a dense storage shelving unit or may be a non-dense storage shelving unit. FIG. 2 is a schematic diagram of a dense-storage the movable shelving unit according to an embodiment of this application. As shown in FIG. 2, a plurality of boxes on the movable shelving unit are used for storing containers, the movable shelving unit is a dense storage shelving unit, and gaps between the containers are very small.

The workstation 160 is a goods picking area. After the movable shelving unit 1302 is carried to the workstation 160, a manual device or an automatic device picks commodities required by an order task from the containers on the movable shelving unit 1302 at the workstation 160. The automatic device includes an automatic mechanical arm.

In a specific implementation provided in this application, the control server is configured to: determine a first target container on a first target movable shelving unit, determine a current storage position and a target position of the first target container, determine a first target carrying device used for carrying the first target movable shelving unit and a target container handling device, send a carrying instruction to the first target carrying device, and send a handling instruction to the target container handling device;
the target carrying device is configured to carry the first target movable shelving unit, that is, a workstation, on which the first target container is placed to a destination in response to the carrying instruction; and
the target container handling device is located at the destination (workstation), and is configured to, in response to the handling instruction, take out the first target container from the current storage position and place the first target container at the target position.

The target position is a storage position in a first target movable carrier or a storage position in another movable carrier other than the first target movable carrier. That is, after taking out the first target container from the current storage position, the target container handling device may further place the first target container at the storage position in the first target movable carrier, or place the first target container at the storage position in the another movable carrier.

Furthermore, the control server is further configured to determine a new storage position for a first target container according to any one selected from the group consisting of popularity of a good stored in the first target container, a degree of correlation between the good stored in the first target container and a good stored in another container, whether a to-be-processed task involves the good stored in the first target container, and distances between a target container handling device and storage positions in movable carriers located at a destination.

It is to be noted that, the popularity of the goods on the movable shelving unit in this application is a shipment quantity or a shipment frequency of the goods. A high popularity value of the goods indicates a large shipment quantity or a high shipment frequency of the goods in the container is large. If a plurality of Stock Keeping Unit (SKU) goods are placed in the container, the popularity of the goods is determined according to a weighted sum value of shipment quantities or shipment frequencies of the plurality of SKU goods. The degree of correlation between goods is specifically a frequency that goods are chosen together in an order task. For example, nail polish and a nail polish remover usually appear in a same order. A degree of correlation between the two goods is relatively high.

The to-be-processed task specifically includes a take-off task (an order pre-hit), a put-on task (a put-on pre-hit), a sorting task (a sorting pre-hit), or the like. A pre-hit principle is that if a task to be processed in the future involves goods, positions of pre-hit goods may be adjusted in advance, and the goods are placed on some specific shelving units for gathering, to facilitate quick processing of the to-be-processed task, thereby saving a scheduling time and improving the scheduling efficiency of the warehouse scheduling system.

The target position of the first target container is determined according to the popularity of the goods, making it convenient to place a container with a high popularity at a storage position that facilitates shipment in a goods picking task. The target position of the first target container is determined according to the degree of correlation between goods, making it convenient to reduce the number of times of movement of the movable shelving unit in a goods picking task and convenient to pick goods.

The container handling device is a device that automatically carries a container from the movable shelving unit or places a container on the movable shelving unit. The container handling device takes out a container from the movable carrier or places a container on the movable carrier in at least one selected from the group consisting of a suction manner, a pushing manner, a clamping manner, a grabbing manner, a hooking manner, a holding manner, and a lifting manner.

The container handling device includes a first sensor, and the first sensor is used for determining whether a container is present at a storage position in the movable shelving unit when the container handling device is to take out a container from the movable shelving unit and/or determining whether a storage position in the movable shelving unit is empty when the container handling device is to place a container at the storage position in the movable shelving unit.

The container handling device further includes a second sensor, and the second sensor is used for determining a pose deviation between the container handling device and a container on the movable shelving unit. In a case that the pose deviation is greater than or equal to a preset tolerance threshold, the container handling device adjusts a pose of the container handling device based on the pose deviation, to make an adjusted pose deviation between the container handling device and a first container less than the preset tolerance threshold.

During actual application, the first sensor and the second sensor may be a same sensor, or may be different sensors. The first sensor and the second sensor may both be visual sensors, depth information sensors or 3D sensors, for example, 2D cameras, 3D cameras, or the like.

In a specific implementation provided in this application, the target container handling device is located at the workstation 160, a transmission line is disposed at the workstation 160, a picking working position is located in a transmission path of the transmission line, the transmission line has a transmission line inlet and a transmission line outlet, and the target container handling device is disposed at each of the transmission line inlet and the transmission line outlet. A target container handling device located at the transmission line inlet takes out the first target container from the current storage position and places the first target container on the transmission line. A target container handling device located at the transmission line outlet takes out the first target container from the transmission line outlet and places the first target container at the target position, where the target position is the storage position in the first target movable shelving unit or the storage position in the another movable shelving unit other than the first target movable shelving unit.

During actual application, a position of a target container may be adjusted on a same movable shelving unit or may be adjusted on different movable shelving units. That is, the target position and the current storage position may be a same movable shelving unit or may be different movable shelving units.

In another specific implementation provided in this application, the target position is a storage position in a second target movable carrier, and correspondingly, the control server 110 is further configured to: determine a storage position in the second target movable carrier for the first target container, determine a second target carrying device used for carrying the second target movable carrier, and send a carrying instruction to the second target carrying device;
the second target carrying device is configured to carry the second target movable carrier to a destination in response to the carrying instruction; and
the target container handling device is further configured to, in response to the handling instruction, take out the first target container from a current storage position in the first target movable carrier and place the first target container at the storage position in the second target movable carrier.

The first target movable carrier is specifically a movable carrier on which the first target container is currently located, and the second target movable carrier is specifically a movable carrier onto which the first target container needs to be moved. That is, the first target container located on the first target movable carrier needs to be moved onto the second target movable carrier. After determining the first target movable carrier and the second movable carrier, the control server further needs to determine the target container handling device used for moving the first target container, send a carrying instruction to the first target carrying device and the second target carrying device, and send a handling instruction to the target container handling device.

The first target carrying device moves the first target movable carrier to the workstation 160 according to the carrying instruction, and the second target carrying device moves the second target movable carrier to the workstation 160 according to the carrying instruction. After the first target movable carrier and the second target movable carrier reach the workstation 160, the target container handling device takes out the first target container from the current storage position in the first target movable carrier and places the target container at the storage position in the second target movable carrier according to the handling instruction.

During actual application, in addition to switching a position of a target container between movable carriers, the target container handling device may further place a container in a handling area onto the movable carrier. The handling area is specifically an area used for allowing a container to be placed thereon after the take-off task, the sorting task or the put-on task is completed. After a corresponding task is completed in a loading area, the container needs to be placed back in the inventory area. After the order task, a stocking task, an inventory task, and a container adjustment task are completed for the target container, the movable carrier carries the container back to the inventory area.

Based on this, in a specific implementation provided in this application, the control server is further configured to: determine a second target container located in a handling area and a storage position in a third target movable carrier, determine a third target carrying device used for carrying the third target movable carrier, send a carrying instruction to the third target carrying device, and send a handling instruction to the target container handling device;
the third target carrying device is configured to carry the third target movable carrier to the handling area in response to the carrying instruction; and
the target container handling device is located in the handling area, and is configured to, in response to the handling instruction, take out the second target container from the handling area and place the second target container at the storage position in the third target movable carrier.

The control server is further configured to determine a new storage position in the second target container in response to at least one selected from the group consisting of a take-off task, a sorting task, and a put-on task.

It is to be noted that, the second target movable carrier used for allowing the first target container to be placed thereon and/or the third target movable carrier used for carrying the second target container in the handling area back to the inventory area may be a shelving unit that is carried from the inventory area according to popularity of a container or a degree of correlation of goods in a container and includes some empty storage positions, or may be an empty shelving unit with no container at any storage position. In this application, this is not limited.

During actual application, the control server 110 is further configured to determine a new storage position for the first target container in response to at least one selected from the group consisting of a take-off task, a sorting task, and a put-on task.

In a specific implementation provided in this application, an example in which a preset container adjustment triggering condition is an order task used for order picking is used. The control server is further configured to determine the first target container, the current storage position in the first target movable carrier for the first target container, and the target position in the second target movable carrier for the first target container according to the order task, where the target position in the second target movable carrier for the first target container is determined according to popularity of goods in the first target container and/or a degree of correlation between goods in the first target container and goods on the second target movable carrier.

In another specific implementation provided in this application, an example in which a preset container adjustment triggering condition is a container adjustment task used for adjusting a container position is used. Containers in the inventory area need to be adjust once every period of time. The containers that need to be adjusted and an adjustment manner are determined according to popularity of shipment of goods and/or a degree of correlation between goods in the period of time, and container positions are adjusted in a special period of time, to complete the container adjustment task.

In a case that the preset container adjustment triggering condition is an order task used for order picking, after order picking is finished for the target container, the target container may be placed back on an original movable carrier or may be placed on a different movable carrier. After determining the target container according to the order task, the control server may determine the current storage position in the first target movable carrier for the first target container and the target position; or may determine the current storage position in the first target movable carrier for the first target container and the target position in the second movable carrier.

In addition, after the first target container is moved away from the current storage position in the first target movable carrier, the control server is further configured to determine the second target container, a current storage position in the first target movable carrier for the second target container, a target position in the second target container according to the order task. That is, after the first target container is taken out from the current storage position in the first target movable carrier, the second target container may be further determined, and the second target container is placed at the current storage position in the first target movable carrier that becomes empty, to adjust a container position according to an order task.

In still another specific implementation provided in this application, the movable carrier may be a two-sided movable shelving unit,
the control server is further configured to: determine that the current storage position for the first target container and the target position are located on opposite sides of the first target movable shelving unit, and send a shelving unit turnaround instruction to the target carrying devices.
the target carrying devices are further configured to carry the first target movable shelving unit to perform a shelving unit turnaround operation in response to the shelving unit turnaround instruction after the target container handling device takes out the first target container; and
the target container handling device is further configured to place the target container at the target position.

In a case that the movable shelving unit is a two-sided shelving unit, the current storage position and the target position of the target container may be opposite sides of the two-sided shelving unit. In this case, a shelving unit turnaround instruction further needs to be sent to the target carrying device. After the target carrying device carries the target movable shelving unit to the workstation, the target container device takes out the target container from the current storage position, executes the shelving unit turnaround instruction to carry the target movable shelving unit to perform a shelving unit turnaround operation, and after the turnaround is completed, places the target container at the target position.

After completing the order task, the stocking task, the container adjustment task or the like at the workstation, the movable carrier is further carried by the carrying device back to the inventory area. Specifically, the target carrying devices are further configured to carry the target movable carriers back to original positions or other positions in the inventory area. Furthermore, the control server is further configured to determine new positions in the target movable carriers according to any one selected from the group consisting of popularity of the target movable carriers and distances between the target movable carriers and an empty position in the storage area. A distance between the another position and the destination is positively correlated to a popularity value of the first target movable shelving unit. For example, when a popularity value of a movable carrier is smaller, a distance from the workstation is shorter. In contrast, when the popularity value of the movable carrier is smaller, the distance from the workstation is longer. The popularity value of the movable carrier is specifically determined according to a popularity value of a container on the movable carrier. For the popularity value of the container, refer to detailed description of the foregoing embodiment. Details are not described herein again. When the movable carrier is carried back to a new position in the inventory area, a new position in the target movable carrier may be determined according to a distance between the movable carrier and the empty position in the storage area. The movable carrier is carried to the closest empty position in the storage area, thereby increasing the carrying efficiency of the movable carrier.

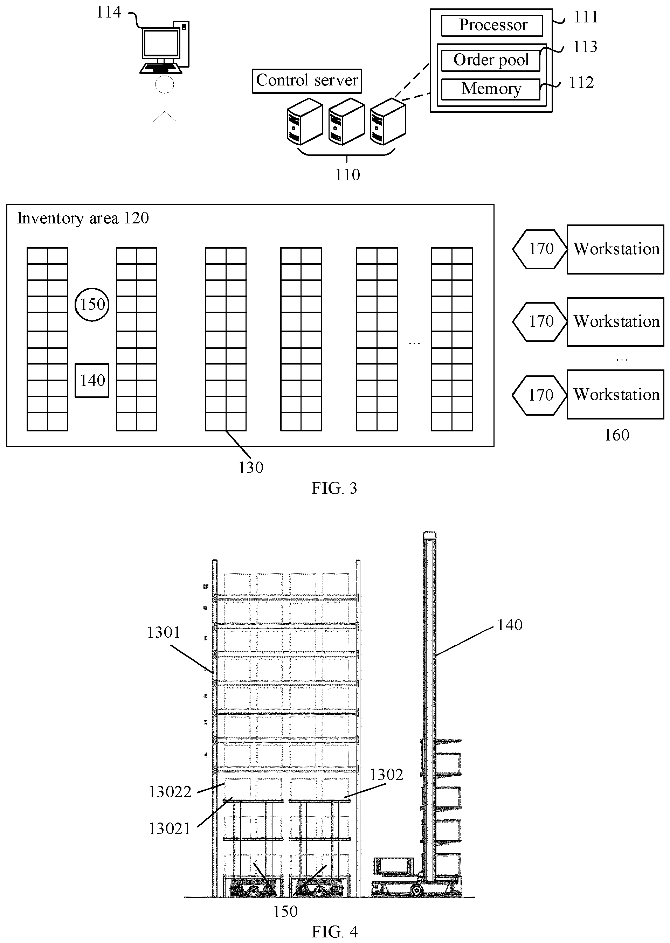

FIG. 3 is a schematic diagram of a system structure of a warehouse scheduling system according to an embodiment of this application. The system includes one or more control servers 110 and an inventory area 120, the inventory area includes a plurality of inventory supports 130, a channel is formed between the plurality of inventory supports 130, one or more carrying devices 150 and one or more access devices 140 run in the channel, a plurality of workstations 160 are disposed outside the inventory area 120, and a container handling device 170 is disposed at each workstation.

The control server 110 is connected to the access device 140, the carrying device 150 and the container handling device 170 by wireless communication. A worker operates the control server 110 through an operating workstation 114 to work. The control server 110 is a software system that runs on a server and has a data storage capability and an information processing capability, and may be wirelessly connected to software systems or the like of the access device 140, the carrying device 150, the container handling device 170, and the workstation 160. The control server 110 may include one or more servers, and may have a centralized control architecture or a distributed computing architecture. The control server 110 has a processor 111 and a memory 112. The memory 112 may have an order pool 113. The order pool 113 stores order information.

The inventory area 120 may be a dense storage area or may be a non-dense storage area. A plurality of inventory supports 130 are disposed in the inventory area 120. Each warehouse shelving unit 130 includes a fixed shelving unit 1301 and a movable carrier 1302. The fixed shelving unit 1301 and the movable carrier 1302 include at least one partition. The at least one partition divides the fixed shelving unit 1301 and the movable carrier 1302 into at least two layers. The movable carrier 1302 is located in a bottom layer of the fixed shelving unit 1301. At least one storage position is disposed at a partition in another layer other than the bottom layer of the fixed shelving unit 1301, and each storage position may accommodate at least one container. The movable carrier includes a movable shelving unit.

FIG. 4 is a front view of an inventory support 130 according to an embodiment of this application. As shown in FIG. 4, the inventory support 130 includes a fixed shelving unit 1301 and a movable carrier 1302, the access device 140 is used for accessing a container on the fixed shelving unit 1301 and the movable carrier 1302, and the carrying device 150 is used for carrying the movable carrier 1302.

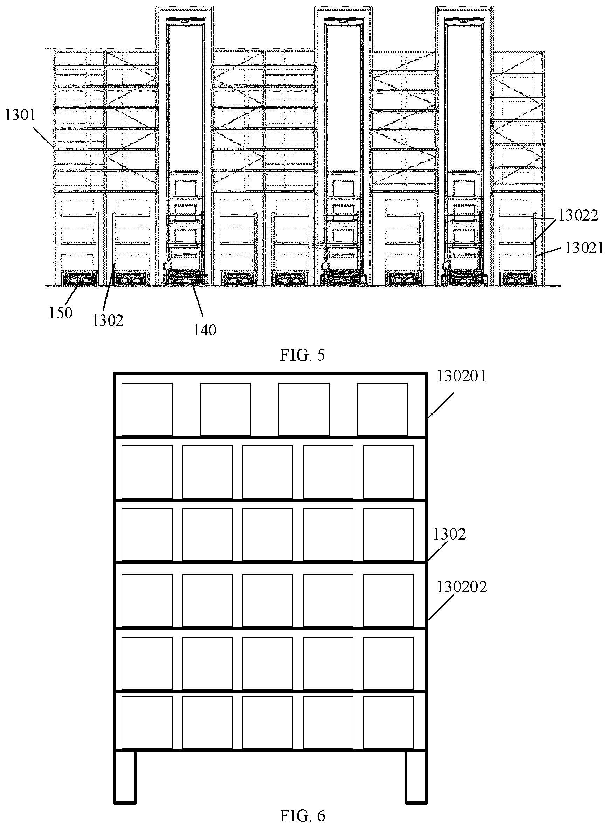

FIG. 5 is a side view of an inventory support 130 according to an embodiment of this application. As shown in FIG. 5, the movable carrier 1302 is located in the bottom layer of the fixed shelving unit 1301. A container in which warehouse goods are accommodated is placed in another layer other than the bottom layer of the fixed shelving unit 1301. A storage position for storing at least one container is disposed on each partition of the fixed shelving unit in a depth direction. That is, when the inventory area 120 is non-dense storage, a storage position for one container may be disposed on each partition of the fixed shelving unit in the depth direction. If the inventory area 120 is dense storage, a storage position for two or more containers may be disposed on each partition of the fixed shelving unit in the depth direction, thereby improving storage efficiency.

Correspondingly, the movable carrier 1302 is disposed in the bottom layer of the fixed shelving unit 1301, and at least one movable carrier 1302 may also be placed in the bottom layer of the fixed shelving unit 1301 in the depth direction. That is, when a storage position for one container is disposed on each partition of the fixed shelving unit in the depth direction, one movable carrier 1302 is also disposed in the bottom layer of the fixed shelving unit 1301 in the depth direction. When a storage position for two or more containers is disposed on each partition of the fixed shelving unit in the depth direction, two or more movable carriers 1302 are also disposed in the bottom layer of the fixed shelving unit 1301 in the depth direction.

The movable carrier 1302 includes at least one vertical column 13021, at least one laminate 13022 is disposed in a vertical direction of the vertical column 13021, and a storage position for storing a container is disposed on each laminate 13022. Further, the movable carrier 1302 includes at least two vertical columns 13021, the at least two vertical columns 13021 are disposed on a same side of the at least one laminate 13022, and connection points between the at least two vertical columns 13021 and the at least one laminate 13022 deviate from an end of the laminate 13022 by a predetermined distance. As shown in FIG. 5, the connection points between the vertical columns 13021 and the laminate 13022 are located on a same side of the laminate 13022, and the connection points deviate from the end of the laminate 13022 by the predetermined distance.

A channel is formed between the plurality of inventory supports 130 of the inventory area 120. The access device 140 and/or the carrying device 150 runs in the channel. The access device 140 is used for storing and acquiring a container on the fixed shelving unit 1301. The carrying device 150 is used for carrying the movable shelving unit 1302. Specifically, the carrying device 150 includes a shelving unit carrying robot. The access device 140 includes a container robot with a single extension position, double extension positions or multiple extension positions. A goods fork of the container robot with a single extension position can only extend once, and take goods on one row of shelving units. A goods fork of the container robot with double extension positions may extend in two sections, a first section extends to take a first row of goods, and a second section extends to take a second row of goods. A goods fork of the container robot with multiple extension positions may extend in a plurality of sections. A specific form of the access device 140 is correlated to the storage position in the fixed shelving unit 1301. If a storage position for one container is disposed on each partition of the fixed shelving unit 1301 in the depth direction, the access device 140 is the container robot with a single extension position. If a storage position for two containers is disposed on each partition of the fixed shelving unit 1301 in the depth direction, the access device 140 is the container robot with double extension positions. If a storage position for a plurality of containers is disposed on each partition of the fixed shelving unit 1301 in the depth direction, the access device 140 is the container robot with multiple extension positions. During actual application, to improve access efficiency, a temporary storage mechanism may further be disposed on the access device, the temporary storage mechanism is used for temporarily storing at least one container, and the temporary storage mechanism may allow the access device to access a plurality of containers once, thereby improving access efficiency.

In a specific embodiment based on the application scenario shown in FIG. 3 provided in this application, the target position is a temporary storage position at a workstation. Correspondingly, the control server 110 is further configured to: determine a storage position in a target fixed shelving unit for the first target container, determine a target access device used for accessing the first target container, and send an access instruction to the target access device;
the target container handling device is further configured to, in response to the handling instruction, take out the first target container from the current storage position and place the first target container at the temporary storage position; and
the target access device is configured to, in response to the access instruction, move to the temporary storage position, take out the first target container from the temporary storage position, move to the target fixed shelving unit, and place the first target container at a storage position in the target fixed shelving unit.

In a specific implementation provided in this application, the target access device may take out the first target container from the temporary storage position at the workstation, carry the first target container onto the fixed shelving unit in the inventory area, and place the first target container at the storage position in the fixed shelving unit.

In another specific implementation provided in this application, the target access device may take out the first target container from the storage position in the fixed shelving unit, carry the first target container to the workstation, and place the first target container at the temporary storage position at the workstation.

In another specific implementation provided in this application, the target access device may take out the first target container from a connection layer of the movable shelving unit, and place the first target container at the storage position in the fixed shelving unit, or take out the first target container from the storage position in the fixed shelving unit, and place the first target container in the connection layer of the movable shelving unit.

The movable shelving unit shown in FIG. 2 is a dense storage shelving unit, a plurality of boxes on the movable shelving unit are containers, the movable shelving unit is a dense storage shelving unit, and gaps between the containers are very small. The goods fork of the access device cannot be accommodated. Therefore, the access device cannot directly acquire a container from the movable shelving unit and place the container on the fixed shelving unit, and the access device cannot directly take out a container in the fixed shelving unit and place the container on the movable shelving unit. Based on this, in a process of moving the first target container on the first target movable shelving unit to the fixed shelving unit, the first target movable shelving unit needs to be carried to the workstation. At the workstation, the container handling device takes out the first target container and places the first target container at the temporary storage position, and then the access device takes out the first target container from the temporary storage position, carries the first target container to the fixed shelving unit, and places the first target container at the storage position in the fixed shelving unit.

It is to be noted that, at the workstation, the temporary storage position may be located in a temporary storage shelving unit, or may be located in a temporary storage roller line. In this application, a specific position of the temporary storage position is not limited.

In still another specific implementation provided in this application, in still another scenario, a container is located on the fixed shelving unit 1301. The container on the fixed shelving unit 1301 needs to be adjusted to a storage position in a movable shelving unit. Similarly, the movable shelving unit provided in this application is a dense storage shelving unit, and the access device cannot directly place a container at the storage position in the movable shelving unit.

Based on this, the target position is the temporary storage position at the workstation, and the control server is further configured to: determine a third target container on a target fixed shelving unit, a current storage position for the third target container, and a storage position for the third target container on a fourth target movable shelving unit, determine a target access device used for accessing the third target container and a fourth target carrying device used for carrying the fourth target movable shelving unit, send an access instruction to the target access device, send a carrying instruction to the fourth target carrying device, and send a handling instruction to the target container handling device;
the target access device is configured to, in response to the access instruction, move to the target fixed shelving unit, take out the third target container, carry the third target container to a destination, and store the third target container at a temporary storage position at the destination;
the fourth target carrying device is configured to carry the fourth target movable shelving unit to the destination in response to the carrying instruction; and
the target container handling device is configured to, in response to the handling instruction, take out the third target container from the temporary storage position and place the third target container on the fourth target movable shelving unit carried by the fourth target carrying device.

In this scenario, in a case that it is determined that the third target container is on the fixed shelving unit 1301, the control server determines that the third target container needs to be placed on the fourth target movable shelving unit 1302, that is, determines the target access device 140 used for accessing the third target container, the fourth target carrying device 150 used for carrying the fourth target movable shelving unit 1302, and the target container handling device 170 used for handling the third target container, sends an access instruction to the target access device 140, sends a carrying instruction to the fourth target carrying device 150, and sends a handling instruction to the target container handling device 170.

After receiving the access instruction, the target access device 140 moves to the target fixed shelving unit 1301, takes out the third target container from the current storage position, carries the third target container to the workstation, and stores the target container at the temporary storage position at the workstation.

After receiving the carrying instruction, the fourth target carrying device 150 moves to the fourth target movable shelving unit 1302, and carries the fourth target movable shelving unit 1302 to the workstation.

The target container handling device 170 is located at the workstation. After the target access device 140 stores the third target container at the temporary storage position at the workstation and the fourth target carrying device 150 carries the fourth target movable shelving unit 1302 to the workstation, the target container handling device 170 takes out the third target container from the temporary storage position and places the third target container at the target position in the fourth target movable shelving unit 1302 according to the handling instruction.

It may be found out through the foregoing embodiment that to place a container on the fixed shelving unit onto the movable shelving unit and to place a container on the movable shelving unit onto the fixed shelving unit, the access device needs to carry the container to the workstation and the carrying device needs to carry the movable shelving unit to the workstation. The target container handling device can execute the handling instruction only after the two devices have respectively carried the container and the movable shelving unit that respectively need to be carried to designated positions, which is time and labor consuming. Based on this, to improve working efficiency, this application further provides another movable shelving unit. FIG. 6 is a schematic diagram of a movable shelving unit according to another embodiment of this application. As shown in FIG. 6, the movable shelving unit 1302 includes at least one connection layer 130201, and a container located in the connection layer may be operated by the access device or the container handling device. In addition to the connection layer 130201, the movable shelving unit 1302 further includes a non-connection layer 130202. A container in the non-connection layer can only be operated by the container handling device.

The carrying device may carry a movable shelving unit on which the target container is placed to a workstation. The container handling device adjusts a position of the target container in a range of the non-connection layer 130202, or may adjust a position of the target container in a range of the connection layer 130201, or may adjust a position of the target container between the connection layer 130201 and the non-connection layer 130202.

When the target container is in the non-connection layer of the movable shelving unit and needs to be placed on the fixed shelving unit, the carrying device may carry the movable shelving unit to the workstation, the container handling device takes out the target container from the non-connection layer and places the target container at the storage position in the connection layer, then the carrying device carries the movable shelving unit to a bottom layer of the fixed shelving unit, and the access device takes out the target container from the storage position in the connection layer and places the target container at the target position in the fixed shelving unit.

When the target container is on the fixed shelving unit and needs to be placed at the storage position in the non-connection layer of the movable shelving unit, the access device may take out the target container from the fixed shelving unit and place the target container in the connection layer of the movable shelving unit, the carrying device carries the movable shelving unit to the workstation, the container handling device takes out the target container from the connection layer and places the target container at the target position in the non-connection layer, and then the carrying device carries the movable shelving unit back to the inventory area.

The connection layer is disposed in the movable shelving unit, making it convenient for the access device to take out a container from or place a container into the connection layer, in a container adjustment task, trips of the access device between the inventory area and the workstation are avoided, thereby saving time and improving storage efficiency.

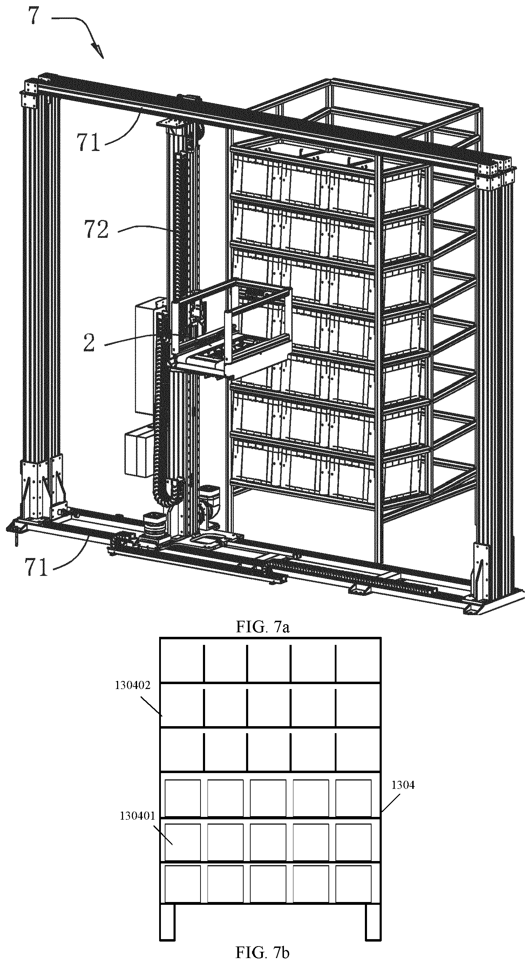

FIG. 7a is a schematic diagram of a container handling device according to an embodiment of this application. As shown in FIG. 7a, a shelf body 7 includes an X-axis track 71 and a Y-axis track 72 that are perpendicular to each other, and the X-axis track 71 and the Y-axis track 72 are disposed on a vertical plane. Specifically, the Y-axis track is constructed to move along the X-axis track, and a container access assembly 2 is constructed to move along the Y-axis track. The container access assembly 2 may further take out a container from a carrier in a Z-axis direction and load the container onto a bearing assembly or unload a container from a bearing assembly and place the container on the movable carrier.

In an implementation, the shelf body 7 includes a portal frame assembly, and the X-axis track 71 includes a ground track structure and an overhead track structure disposed on the portal frame assembly. The X-axis track 71 extends in a horizontal direction, and the Y-axis track 72 extends in a vertical direction. The Y-axis track 72 may be a vertical column structure, two ends of the Y-axis track 72 are respectively fitted with the ground track structure and the overhead track structure in a guided manner, and the Y-axis track 72 moves horizontally along the ground track structure and the overhead track structure.

Specifically, an X-axis movement board is disposed on each of two X-axis tracks 71, the X-axis movement boards can move in the horizontal direction of the X-axis track 71, and the two ends of the Y-axis track 72 are respectively fastened to the two X-axis movement boards. A Y-axis movement board is disposed on the Y-axis track 72, the Y-axis movement board can move in a vertical direction of the Y-axis track 72, and the container access assembly is fastened to the Y-axis movement board. A guiding assembly may further be mounted on each of the X-axis movement board and the Y-axis movement board, which correspondingly slide along the X-axis track 71 and the Y-axis track 72 through the guiding assemblies.

A driving system is further disposed on the shelf body 7, and the driving system includes an X-axis driving unit and a Y-axis driving unit. The X-axis driving unit is used for driving the Y-axis track 72 to move along the X-axis track 71, and the Y-axis driving unit is used for driving the container access assembly to move along the Y-axis track 72. In this way, the container access assembly may move to a corresponding position, for example, a position corresponding to a target position in a shelving unit. The driving system may include a driving motor, a transmission gear, a transmission chain, a lead screw assembly, or the like, which can be set by a person skilled in the art based on existing technologies, to implement the foregoing functions of the driving system.

In an implementation of the present disclosure, at least two Y-axis tracks 72 may be disposed, and the at least two Y-axis tracks 72 move relatively independently between two vertically arranged X-axis tracks 71. At least one container access assembly is disposed on each Y-axis track, and the container access assembly on each Y-axis track may independently move, thereby improving the working efficiency of a handling apparatus.

In this embodiment, the handling apparatus is used for transporting a container on a shelving unit, the container access assembly can move on the shelf body 7 along the X-axis track 71 and the Y-axis track 72 to a target position on a shelving unit.

During actual application, the container access assembly accesses a container in at least one selected from the group consisting of a suction manner, a pushing manner, a clamping manner, a grabbing manner, a hooking manner, a holding manner, and a lifting manner.

The container handling device is disposed in a workstation area, acquires a first order container in response to a first container access instruction, and places the first order container at a target storage position in a first temporary storage carrier through the container access assembly.

In the order task based on the application scenario in FIG. 3 provided in this application, the control server is configured to: determine, according to an order task, a target fixed shelving unit on which a target container that accommodates an order good is currently located and a target movable carrier onto which the target container is about to be placed, where the target movable carrier has a storage position used for allowing the target container to be placed thereon, determine a target access device used for accessing the target container, a target carrying device used for carrying the target movable carrier, and a target cargo box handling device used for handling a target cargo box, send an access instruction to the target access device, send a carrying instruction to the target carrying device, and send a handling instruction to the target cargo box handling device;
the target access device is configured to, in response to the access instruction, move to the target fixed shelving unit, and take out the target container from the target fixed shelving unit and place the target container at a storage position in the target movable carrier or take out the target container from a storage position in the target movable carrier and place the target container at a storage position in the target fixed shelving unit;
the target carrying device is configured to carry the target movable carrier on which the target container is placed to a destination in response to the carrying instruction; and
the target container handling device is located at the destination, and is configured to, in response to the handling instruction, take out a target container from the target movable carrier carried by the target carrying device or place a target container on the target movable carrier carried by the target carrying device.

During actual application, in the order task, goods hit by an order are located in a target container on a fixed shelving unit, and the target container needs to be carried to a workstation for order picking. The control server determines, according to the order task, the target container on the target fixed shelving unit and the target movable carrier onto which the target container is about to be placed, determines the target access device for accessing the target container, the target carrying device for carrying the target movable carrier, and the target container handling device for handling the target container, sends an access instruction to the target access device, sends a carrying instruction to the target carrying device, and sends a handling instruction to the target container handling device.

The target access device moves to the target fixed shelving unit, and takes out the target container on the fixed shelving unit, and places the target container at the storage position in the movable carrier; or takes out the target container from the storage position in the movable carrier and places the target container at the storage position for the fixed shelving unit.

After the target access device places the target container on the storage position in the movable carrier, the target carrying device carries the target movable carrier to the workstation. The target container handling device is located at the workstation, and takes out, according to the handling instruction, the target container from the target movable carrier carried by the target carrying device, and performs order picking. After completing the order task, the container handling device may further place the target container back to the target movable carrier.

During actual application, the storage position for the target container on the target movable carrier may be determined according to popularity of goods stored in the target container and/or a degree of correlation between goods stored in the target container and goods stored in another container. For related content of the popularity of the goods in the target container and the degree of correlation between the goods in the target container and the goods stored in the another container, refer to the related description of the foregoing embodiment. Details are not described herein again.

In a specific implementation provided in this application, the control server is configured to: schedule the access device to switch a position of a first target container between storage positions in the fixed shelving unit, and schedule the access device to switch a position of the first target container between the storage position in the fixed shelving unit and the storage position in the movable carrier; and/or, schedule the container handling device to switch a position of the first target container between storage positions in the movable carrier.

In a specific implementation provided in this application, the control server is configured to, in response to a sorting task, schedule the access device to adjust the first target container from an original storage position in the fixed shelving unit to another storage position in the fixed shelving unit or keep the first target container remaining at the original storage position in the fixed shelving unit; schedule the access device to adjust the first target container from an original storage position in the fixed shelving unit to another storage position in the movable carrier; schedule the access device to adjust the first target container from an original storage position in the movable carrier to another storage position in the fixed shelving unit; and/or, schedule the container handling device to adjust the first target container from an original storage position in the movable carrier to another storage position in the movable carrier or keep the first target container remaining at the original storage position in the movable carrier.

In a specific implementation provided in this application, the movable carrier is a movable shelving unit, the movable shelving unit includes at least one partition, the at least one partition divides the movable shelving unit into at least two layers, and at least one storage position is disposed on the partition of the movable shelving unit.

In a specific implementation provided in this application, the movable carrier may further be a mixed movable carrier, the mixed movable carrier may bear at least two of a first container that may accommodate a warehouse good, a second container that may accommodate a warehouse good, and a stored good.

To further improve picking efficiency, the warehouse scheduling system provided in this application further provides a mixed movable carrier 1304, and the mixed movable carrier 1304 is located in the inventory area. The mixed movable carrier may bear at least two of a first container that may accommodate a warehouse good, a second container that may accommodate a warehouse good, and a stored good. For the second container or goods on the mixed movable carrier, a container or goods may be adjusted by using a handling device such as a forklift, a mechanical arm or the like or through manual operations.

FIG. 7b is a schematic diagram of a first mixed movable carrier according to an embodiment of this application. As shown in FIG. 7b, the mixed movable carrier 1304 includes a first storage position 130401 and a cell 130402. A first container is placed at the first storage position 130401, and bulk goods are placed in the cell 130402.

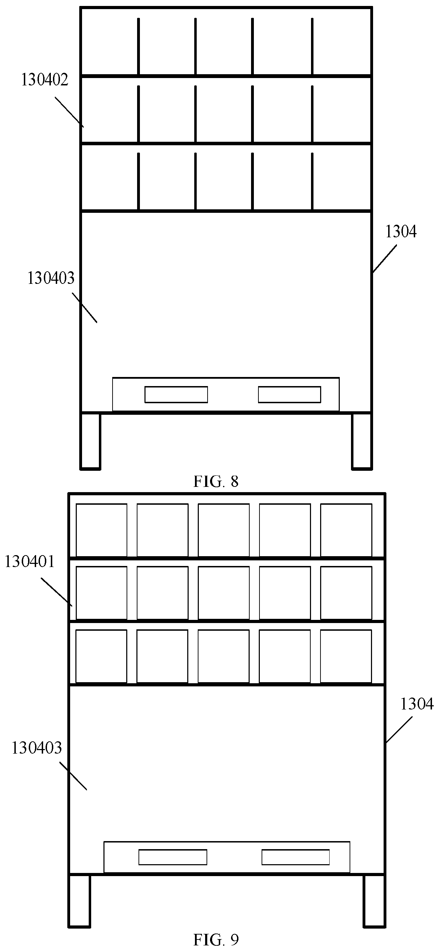

FIG. 8 is a schematic diagram of a second mixed movable carrier according to an embodiment of this application. As shown in FIG. 8, the mixed movable carrier 1304 includes a second storage position 130403 and a cell 130402. A bearing tray is placed at the second storage position 130403, and the bearing tray bears warehouse goods; and bulk goods are placed in the cell 130402.

FIG. 9 is a schematic diagram of a third mixed movable carrier according to an embodiment of this application. As shown in FIG. 9, the mixed movable carrier 1304 includes a first storage position 130401 and a second storage position 130403. A first container is placed at the first storage position 130401; and a bearing tray is placed at the second storage position 130403, and the bearing tray bears warehouse goods.

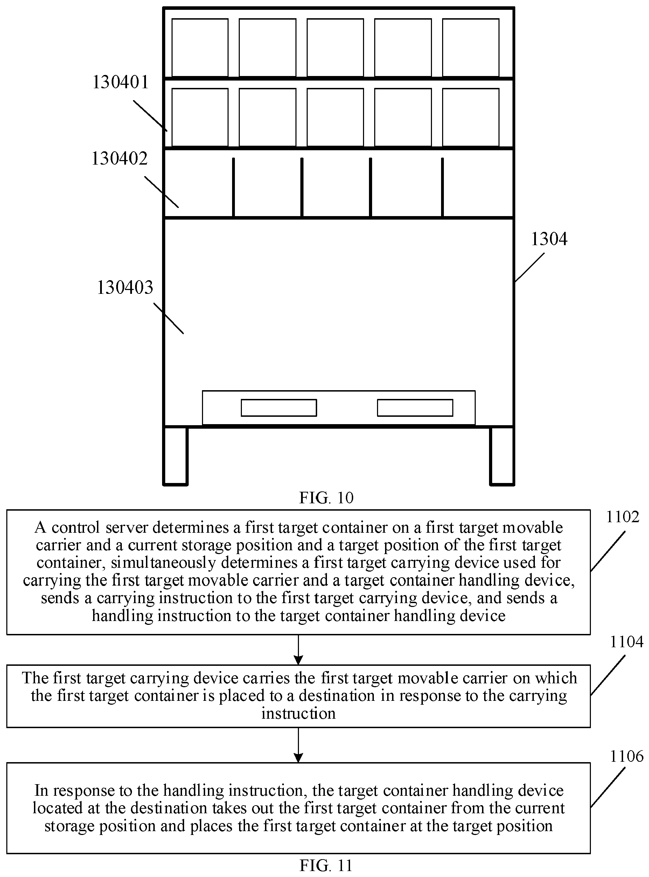

FIG. 10 is a schematic diagram of a fourth mixed movable carrier according to an embodiment of this application. As shown in FIG. 10, the mixed movable carrier 1304 includes a first storage position 130401, a cell 130402, and a second storage position 130403. A first container is placed at the first storage position 130401; a bearing tray is placed at the second storage position 130403, and the bearing tray bears warehouse goods; and bulk goods are placed in the cell 130402.

A warehouse system provided in this application is further described below with reference to a specific scenario:

### Embodiment 1

A warehouse scheduling system provided in Embodiment 1 includes a control server, a carrying device, an inventory area, a container handling device, and a workstation, the inventory area includes a plurality of dense-storage movable shelving units, each movable shelving unit includes at least one partition, the at least one partition divides the movable shelving unit into at least two layers, at least one storage position is disposed on each partition, and each storage position accommodates at least one container.

The control server determines, according to a container adjustment task, that a target container is located on a target movable shelving unit, determines that a current storage position and a target position of the target container are both in the target movable shelving unit, determines, based on this, a target carrying device used for carrying the target movable shelving unit and a target container handling device used for handling the target container, sends a carrying instruction to the target carrying device, and sends a handling instruction to the target container handling device.

The target carrying device carries the target movable shelving unit on which the target container is placed to the workstation in response to the carrying instruction.

The target container handling device is located at the workstation, and in response to the handling instruction, takes out the target container from the current storage position in the target movable shelving unit and places the target container at the target position in the target movable shelving unit.

### Embodiment 2

A warehouse scheduling system provided in Embodiment 2 includes a control server, a carrying device, an inventory area, a container handling device, and a workstation, the inventory area includes a plurality of dense-storage movable shelving units, each movable shelving unit includes at least one partition, the at least one partition divides the movable shelving unit into at least two layers, at least one storage position is disposed on each partition, and each storage position accommodates at least one container.

The control server determines, according to an order task, that a target container is located on a target movable shelving unit, determines that a current storage position and a target position of the target container are both in the target movable shelving unit, determines, based on this, a target carrying device used for carrying the target movable shelving unit and a target container handling device used for handling the target container, sends a carrying instruction to the target carrying device, and sends a handling instruction to the target container handling device.

The target carrying device carries the target movable shelving unit on which the target container is placed to the workstation in response to the carrying instruction.

The target container handling device is located at the workstation, and in response to the handling instruction, takes out the target container from the current storage position in the target movable shelving unit, performs goods picking of the order task, and after goods picking is completed, places the target container at the target position in the target movable shelving unit.

### Embodiment 3

A warehouse scheduling system provided in Embodiment 3 includes a control server, a carrying device, an inventory area, a container handling device, and a workstation, the inventory area includes a plurality of dense-storage movable shelving units, each movable shelving unit includes at least one partition, the at least one partition divides the movable shelving unit into at least two layers, at least one storage position is disposed on each partition, and each storage position accommodates at least one container.

The control server determines, according to an order task, that a target container is located on a first target movable shelving unit, and determines a current storage position in the first target movable shelving unit for the target container and a target position in a second target movable shelving unit. That is, the current storage position and the target position are not in a same movable shelving unit. Based on this, a first target carrying device used for carrying the first target movable shelving unit, a second target carrying device used for carrying the second target movable shelving unit, and a target container handling device used for handling the target container are determined, a first carrying instruction is sent to the first target carrying device, a second carrying instruction is sent to the second target carrying device, and a handling instruction is sent to the target container handling device.

The first target carrying device carries the first target movable shelving unit on which the target container is placed to the workstation in response to the first carrying instruction.

The second target carrying device carries the second target movable shelving unit to the workstation in response to the second carrying instruction.

The target container handling device is located at the workstation, and in response to the handling instruction, takes out the target container from the current storage position in the first target movable shelving unit and places the target container at the target position in the second target movable shelving unit.

### Embodiment 4

A warehouse scheduling system provided in Embodiment 4 includes a control server, a carrying device, an inventory area, a container handling device, and a handling area, the inventory area includes a plurality of dense-storage movable shelving units, each movable shelving unit includes at least one partition, the at least one partition divides the movable shelving unit into at least two layers, at least one storage position is disposed on each partition, and each storage position accommodates at least one container.

The control server determines, according to a stocking task, that a target container is located in the handling area and the target container needs to be carried to the inventory area, determines a storage position in a target movable shelving unit for a target position, and determines, based on this, a target carrying device used for carrying the target movable shelving unit and a target container handling device used for handling the target container, sends a carrying instruction to the target carrying device, and sends a handling instruction to the target container handling device.

The target carrying device carries the target movable shelving unit to the handling area in response to the carrying instruction.

The target container handling device is located in the handling area, and in response to the handling instruction, takes out the target container from the current storage position in the handling area and places the target container at the target position in the target movable shelving unit.

### Embodiment 5

Embodiment 5 provides a warehouse scheduling system, including a control server, an access device, a carrying device, an inventory area, a container handling device, and a workstation, the inventory area at least includes a plurality of fixed shelving units and a plurality of dense-storage movable shelving units, each fixed shelving unit includes at least one partition, the at least one partition divides the fixed shelving unit into at least two layers, each movable shelving unit is located in a bottom layer of the fixed shelving unit, at least one storage position is disposed at the partition of the fixed shelving unit, and each storage position may accommodate at least one container; and the movable shelving unit includes at least one partition, the at least one partition divides the movable shelving unit into at least two layers, at least one storage position is disposed at the partition of the movable shelving unit, and each storage position may accommodate at least one container.

The control server determines a target container, determines that a current storage position for the target container is in a target movable shelving unit, a target position of the target container is in a fixed shelving unit, and the target container needs to be adjusted from the target movable shelving unit to the fixed shelving unit, determines a target carrying device used for carrying the target movable shelving unit, a target access device used for accessing the target container, and a target container handling device used for handling the target container, sends an access instruction to the target access device, sends a carrying instruction to the target carrying device, and sends a handling instruction to the target container handling device.

The target carrying device moves to the target movable shelving unit and carries the target movable shelving unit to the workstation in response to the carrying instruction.

The target container handling device is located at the workstation, and in response to the handling instruction, takes out the target container from the target movable shelving unit and places the target container at a temporary storage position.

In response to the access instruction, the target access device moves to the workstation, and after the target container is placed at the temporary storage position, takes out the target container from the temporary storage position, carries the target container to a target fixed shelving unit, and places the target container at a target position in the target fixed shelving unit.

### Embodiment 6

Embodiment 6 provides a warehouse scheduling system, including a control server, an access device, a carrying device, an inventory area, a container handling device, and a workstation, the inventory area at least includes a plurality of fixed shelving units and a plurality of dense-storage movable shelving units, each fixed shelving unit includes at least one partition, the at least one partition divides the fixed shelving unit into at least two layers, each movable shelving unit is located in a bottom layer of the fixed shelving unit, at least one storage position is disposed at the partition of the fixed shelving unit, and each storage position may accommodate at least one container; and the movable shelving unit includes at least one partition, the at least one partition divides the movable shelving unit into at least two layers, at least one storage position is disposed at the partition of the movable shelving unit, and each storage position may accommodate at least one container.

The control server determines a target container, determines that a current storage position for the target container is in a fixed shelving unit, a target position of the target container is in a target movable shelving unit, and the target container needs to be adjusted from the fixed shelving unit to the target movable shelving unit, determines a target carrying device used for carrying the target movable shelving unit, a target access device used for accessing the target container, and a target container handling device used for handling the target container, sends an access instruction to the target access device, sends a carrying instruction to the target carrying device, and sends a handling instruction to the target container handling device.

In response to the access instruction, the target access device moves to a target fixed shelving unit, takes out the target container from a current storage position in the target fixed shelving unit, carries the target container to the workstation, and places the target container at the temporary storage position at the workstation.

The target carrying device moves to the target movable shelving unit and carries the target movable shelving unit to the workstation in response to the carrying instruction.

The target container handling device is located at the workstation, and in response to the handling instruction, takes out the target container from the temporary storage position and places the target container on the target movable shelving unit.

### Embodiment 7

Embodiment 7 provides a warehouse scheduling system, including a control server, an access device, a carrying device, an inventory area, a container handling device, and a workstation, the inventory area at least includes a plurality of fixed shelving units and a plurality of dense-storage movable shelving units, each fixed shelving unit includes at least one partition, the at least one partition divides the fixed shelving unit into at least two layers, each movable shelving unit is located in a bottom layer of the fixed shelving unit, at least one storage position is disposed at the partition of the fixed shelving unit, and each storage position may accommodate at least one container; and the movable shelving unit includes at least one partition, the at least one partition divides the movable shelving unit into at least two layers, at least one storage position is disposed at the partition of the movable shelving unit, each storage position may accommodate at least one container, and the movable shelving unit includes at least one connection layer and a non-connection layer other than the connection layer.

The control server determines a target container, determines that a current storage position for the target container is at a storage position in a non-connection layer of a target movable shelving unit, a target position of the target container is in a fixed shelving unit, and the target container needs to be adjusted from the target movable shelving unit to the fixed shelving unit, determines a target carrying device used for carrying the target movable shelving unit, a target access device used for accessing the target container, and a target container handling device used for handling the target container, sends an access instruction to the target access device, sends a carrying instruction to the target carrying device, and sends a handling instruction to the target container handling device.

The target carrying device moves to the target movable shelving unit and carries the target movable shelving unit to the workstation in response to the carrying instruction.

The target container handling device is located at the workstation, and in response to the handling instruction, takes out the target container from the storage position in the non-connection layer of the target movable shelving unit and places the target container at the storage position in a connection layer of the target movable shelving unit.

The target carrying device places the target container at the storage position in the connection layer of the target movable shelving unit and carries the target movable shelving unit to a bottom layer of a target fixed shelving unit in response to the carrying instruction.

In response to the access instruction, the target access device takes out the target container from the connection layer of the target movable shelving unit and places the target container in the target position of the target fixed shelving unit.

### Embodiment 8

Embodiment 8 provides a warehouse scheduling system, including a control server, an access device, a carrying device, an inventory area, a container handling device, and a workstation, the inventory area at least includes a plurality of fixed shelving units and a plurality of dense-storage movable shelving units, each fixed shelving unit includes at least one partition, the at least one partition divides the fixed shelving unit into at least two layers, each movable shelving unit is located in a bottom layer of the fixed shelving unit, at least one storage position is disposed at the partition of the fixed shelving unit, and each storage position may accommodate at least one container; and the movable shelving unit includes at least one partition, the at least one partition divides the movable shelving unit into at least two layers, at least one storage position is disposed at the partition of the movable shelving unit, each storage position may accommodate at least one container, and the movable shelving unit includes at least one connection layer and a non-connection layer other than the connection layer.

The control server determines a target container, determines that a current storage position for the target container is in a fixed shelving unit, a target position of the target container is a storage position in a non-connection layer of a target movable shelving unit, and the target container needs to be adjusted from the fixed shelving unit to the target movable shelving unit, determines a target carrying device used for carrying the target movable shelving unit, a target access device used for accessing the target container, and a target container handling device used for handling the target container, sends an access instruction to the target access device, sends a carrying instruction to the target carrying device, and sends a handling instruction to the target container handling device.

In response to the access instruction, the target access device takes out the target container from a storage position in a target fixed shelving unit and places the target container at an empty storage position in a connection layer of the target movable shelving unit.

The target carrying device moves to the target movable shelving unit and carries the target movable shelving unit to the workstation in response to the carrying instruction.

The target container handling device is located at the workstation, and in response to the handling instruction, takes out the target container from the storage position in the connection layer of the target movable shelving unit and places the target container at a target position in the non-connection layer of the target movable shelving unit.

### Embodiment 9

Embodiment 9 provides a warehouse scheduling system, including a control server, an access device, a carrying device, an inventory area, a container handling device, and a workstation, the inventory area at least includes a plurality of fixed shelving units and a plurality of dense-storage movable shelving units, each fixed shelving unit includes at least one partition, the at least one partition divides the fixed shelving unit into at least two layers, each movable shelving unit is located in a bottom layer of the fixed shelving unit, at least one storage position is disposed at the partition of the fixed shelving unit, and each storage position may accommodate at least one container; and the movable shelving unit includes at least one partition, the at least one partition divides the movable shelving unit into at least two layers, at least one storage position is disposed at the partition of the movable shelving unit, each storage position may accommodate at least one container, and the movable shelving unit includes at least one connection layer and a non-connection layer other than the connection layer.

The control server determines a target container according to an order task, determines that a current storage position for the target container is in a fixed shelving unit, a target position of the target container is a storage position in a non-connection layer of a target movable shelving unit, and the target container needs to be adjusted from the fixed shelving unit to the target movable shelving unit, determines a target carrying device used for carrying the target movable shelving unit, a target access device used for accessing the target container, and a target container handling device used for handling the target container, sends an access instruction to the target access device, sends a carrying instruction to the target carrying device, and sends a handling instruction to the target container handling device.

In response to the access instruction, the target access device takes out the target container from a storage position in a target fixed shelving unit and places the target container at an empty storage position in a connection layer of the target movable shelving unit.

The target carrying device moves to the target movable shelving unit and carries the target movable shelving unit to the workstation in response to the carrying instruction.

The target container handling device is located at the workstation, and in response to the handling instruction, takes out the target container from the storage position in the connection layer of the target movable shelving unit, places the target container at a picking working position corresponding to the order task to perform an order picking task, and after the order picking task is completed, places the target container at the target position in the non-connection layer of the target movable shelving unit.

The embodiments of this application provide a warehouse scheduling system. The system includes a control server, a carrying device, an inventory area, and a container handling device. The inventory area at least includes a plurality of movable shelving units, the movable shelving unit includes at least one partition, the at least one partition divides the movable shelving unit into at least two layers, at least one storage position is disposed at the partition of the movable shelving unit, and each storage position may accommodate at least one container. The control server is configured to: determine a target container on a target movable shelving unit and a current storage position and a target position of the target container, determine a target carrying device used for carrying the target movable shelving unit and a target container handling device used for handling the target container, send a carrying instruction to the target carrying device, and send a handling instruction to the target container handling device. The target carrying device is configured to carry the target movable shelving unit on which the target container is placed to a destination in response to the carrying instruction. The target container handling device is located at the destination, and is configured to, in response to the handling instruction, take out the target container from the current storage position and place the target container at the target position. In the warehouse scheduling system in the embodiments of this application, dense-storage movable shelving units are provided, and container access devices are disposed at workstations. Through the dense-storage movable shelving units and the container access devices for operating containers on the movable shelving units, space utilization of an inventory area is improved, to allow the inventory area to store more goods, so that costs in the entire warehouse scheduling system are reduced.

FIG. 11 is a flowchart of a warehouse scheduling method according to an embodiment of this application. The method is applied to a warehouse scheduling system. The system includes a control server, a carrying device, an inventory area, and a container handling device, the inventory area at least includes a plurality of movable carriers, each movable carrier includes at least one storage position, and each storage position may accommodate at least one container.

The method includes the following steps.

Step 1102: The control server determines a first target container on a first target movable carrier and a current storage position and a target position of the first target container, determines a first target carrying device used for carrying the first target movable carrier and a target container handling device, sends a carrying instruction to the first target carrying device, and sends a handling instruction to the target container handling device.

Step 1104: The first target carrying device carries the first target movable carrier on which the first target container is placed to a destination in response to the carrying instruction.

Step 1106: In response to the handling instruction, the target container handling device located at the destination takes out the first target container from the current storage position and places the first target container at the target position.

In an optional implementation provided in this application, the target position is a storage position in a first target movable carrier or a storage position in another movable carrier other than the first target movable carrier.

In an optional implementation provided in this application, the method further includes:
determining, by the control server, a new storage position for a first target container according to any one selected from the group consisting of popularity of a good stored in the first target container, a degree of correlation between the good stored in the first target container and a good stored in another container, whether a to-be-processed task involves the good stored in the first target container, and distances between a target container handling device and storage positions in movable carriers located at a destination.

In an optional implementation provided in this application, the target position is a storage position in a second target movable carrier; and
the method further includes:
determining, by the control server, a storage position in the second target movable carrier for the first target container, determining, by the control server, a second target carrying device used for carrying the second target movable carrier, and sending, by the control server, a carrying instruction to the second target carrying device;
carrying, by the second target carrying device, the second target movable carrier to a destination in response to the carrying instruction; and
in response to the handling instruction, taking out, by the target container handling device, the first target container from a current storage position in the first target movable carrier and placing, by the target container handling device, the first target container at the storage position in the second target movable carrier.

In an optional implementation provided in this application, the method further includes:
determining, by the control server, a second target container located in a handling area and a storage position in a third target movable carrier, determining, by the control server, a third target carrying device used for carrying the third target movable carrier, sending, by the control server, a carrying instruction to the third target carrying device, and sending, by the control server, a handling instruction to the target container handling device;
carrying, by the third target carrying device, the third target movable carrier to the handling area in response to the carrying instruction; and
in response to the handling instruction, taking out, by the target container handling device located in the handling area, the second target container from the handling area and placing, by the target container handling device, the second target container at the storage position in the third target movable carrier.

In an optional implementation provided in this application, the method further includes:
determining, by the control server, a new storage position for the second target container in response to at least one selected from the group consisting of a take-off task, a sorting task, and a put-on task.

In an optional implementation provided in this application, the method further includes:
determining, by the control server, a new storage position for the first target container in response to at least one selected from the group consisting of a take-off task, a sorting task, and a put-on task.

In an optional implementation provided in this application, the system further includes an access device and a plurality of fixed shelving units, each fixed shelving unit includes at least one partition, the at least one partition divides the fixed shelving unit into at least two layers, the movable carrier is located in a bottom one among the at least two layers of the fixed shelving unit, at least one storage position is disposed at the partition of the fixed shelving unit, each storage position may accommodate at least one container, and the target position is a temporary storage position at a workstation; and
the method further includes:
determining, by the control server, a storage position in a target fixed shelving unit for the first target container, determining, by the control server, a target access device used for accessing the first target container, and sending, by the control server, an access instruction to the target access device;
in response to the handling instruction, taking out, by the target container handling device, the first target container from the current storage position and placing, by the target container handling device, the first target container at the temporary storage position; and
in response to the access instruction, moving, by the target access device, to the temporary storage position, taking out, by the target access device, the first target container from the temporary storage position, moving, by the target access device, to the target fixed shelving unit, and placing, by the target access device, the first target container at a storage position in the target fixed shelving unit.

In an optional implementation provided in this application, the system further includes an access device and a plurality of fixed shelving units, each fixed shelving unit includes at least one partition, the at least one partition divides the fixed shelving unit into at least two layers, the movable carrier is located in a bottom one among the at least two layers of the fixed shelving unit, at least one storage position is disposed at the partition of the fixed shelving unit, each storage position may accommodate at least one container, and the target position is a temporary storage position at a workstation; and
the method further includes:
determining, by the control server, a third target container on a target fixed shelving unit, a current storage position for the third target container, and a storage position for the third target container on a fourth target movable carrier, determining, by the control server, a target access device used for accessing the third target container and a fourth target carrying device used for carrying the fourth target movable carrier, sending, by the control server, an access instruction to the target access device, sending, by the control server, a carrying instruction to the fourth target carrying device, and sending, by the control server, a handling instruction to the target container handling device;
in response to the access instruction, moving, by the target access device, to the target fixed shelving unit, taking out, by the target access device, the third target container, carrying, by the target access device, the third target container to a destination, and storing, by the target access device, the third target container at a temporary storage position at the destination;
carrying, by the fourth target carrying device, the fourth target movable carrier to the destination in response to the carrying instruction; and
in response to the handling instruction, taking out, by the target container handling device, the third target container from the temporary storage position and placing, by the target container handling device, the third target container on the fourth target movable carrier carried by the fourth target carrying device.

In an optional implementation provided in this application, the target container handling device is located at the workstation, a transmission line is disposed at the workstation, a picking working position is located in a transmission path of the transmission line, the transmission line includes a transmission line inlet and a transmission line outlet, and the target container handling device is disposed at each of the transmission line inlet and the transmission line outlet; and
the method further includes:
taking out, by a target container handling device located at the transmission line inlet, the first target container from the current storage position and placing, by the target container handling device, the first target container on the transmission line; and
taking out, by a target container handling device located at the transmission line outlet, the first target container from the transmission line outlet and placing, by the target container handling device, the first target container at the target position, where the target position is the storage position in the first target movable carrier or the storage position in the another movable carrier other than the first target movable carrier.

In an optional implementation provided in this application, the method further includes:
carrying, by the target carrying devices, the target movable carriers back to an original position or another position in the inventory area.

In an optional implementation provided in this application, the method further includes:
determining, by the control server, new positions in the target movable carriers according to any one selected from the group consisting of popularity of the target movable carriers and distances between the target movable carriers and an empty position in the storage area.

In an optional implementation provided in this application, the movable shelving unit is a two-sided shelving unit; and
the method further includes:
determining, by the control server, that the current storage position and the target position of the first target container are located on opposite sides of the first target movable shelving unit, and sending, by the control server, a shelving unit turnaround instruction to the target carrying devices;
carrying, by the target carrying devices, the first target movable shelving unit to perform a shelving unit turnaround operation in response to the shelving unit turnaround instruction after the target container handling device takes out the first target container; and
placing, by the target container handling device, the target container at the target position.

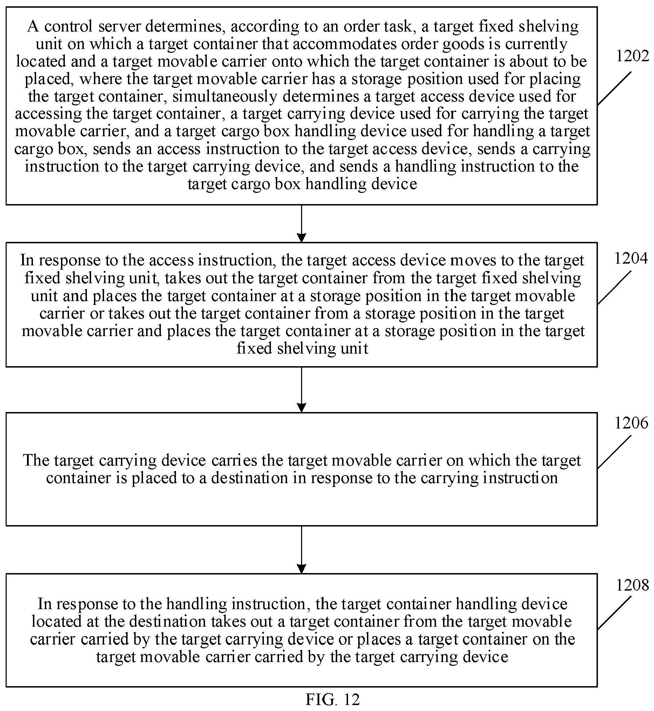

FIG. 12 is a flowchart of a warehouse scheduling method according to an embodiment of this application. The method is applied to a warehouse scheduling system. The system includes a control server, an access device, a carrying device, an inventory area, and a container handling device, the inventory area at least includes a plurality of fixed shelving units and a plurality of movable carriers, each fixed shelving unit includes at least one partition, the at least one partition divides the fixed shelving unit into at least two layers, each movable carrier is located in a bottom layer of the fixed shelving unit, at least one storage position is disposed at the partition of the fixed shelving unit, and each storage position may accommodate at least one container; and the movable carrier includes at least one storage position, and each storage position may accommodate at least one container.

The method includes the following steps.

Step 1202: The control server determines, according to an order task, a target fixed shelving unit on which a target container that accommodates an order good is currently located and a target movable carrier onto which the target container is about to be placed, where the target movable carrier has a storage position used for allowing the target container to be placed thereon, determines a target access device used for accessing the target container, a target carrying device used for carrying the target movable carrier, and a target cargo box handling device used for handling a target cargo box, sends an access instruction to the target access device, sends a carrying instruction to the target carrying device, and sends a handling instruction to the target cargo box handling device.

Step 1204: In response to the access instruction, the target access device moves to the target fixed shelving unit, takes out the target container from the target fixed shelving unit and places the target container at a storage position in the target movable carrier or takes out the target container from a storage position in the target movable carrier and places the target container at a storage position in the target fixed shelving unit.

Step 1206: The target carrying device carries the target movable carrier on which the target container is placed to a destination in response to the carrying instruction.

Step 1208: In response to the handling instruction, the target container handling device located at the destination takes out a target container from the target movable carrier carried by the target carrying device or places a target container on the target movable carrier carried by the target carrying device.

In an optional implementation provided in this application, the method further includes:
scheduling, by the control server, the access device to switch a position of a first target container between storage positions in the fixed shelving unit, and scheduling the access device to switch a position of the first target container between the storage positions in the fixed shelving unit and the movable carrier; and/or, scheduling the container handling device to switch a position of the first target container between storage positions in the movable carrier.

In an optional implementation provided in this application, the method further includes:
in response to a sorting task, scheduling, by the control server, the access device to adjust the first target container from an original storage position in the fixed shelving unit to another storage position in the fixed shelving unit or keep the first target container remaining at the original storage position in the fixed shelving unit; scheduling the access device to adjust the first target container from an original storage position in the fixed shelving unit to another storage position in the movable carrier; scheduling the access device to adjust the first target container from an original storage position in the movable carrier to another storage position in the fixed shelving unit; and/or, scheduling the container handling device to adjust the first target container from an original storage position in the movable carrier to another storage position in the movable carrier or keep the first target container remaining at the original storage position in the movable carrier.

### Embodiment 10

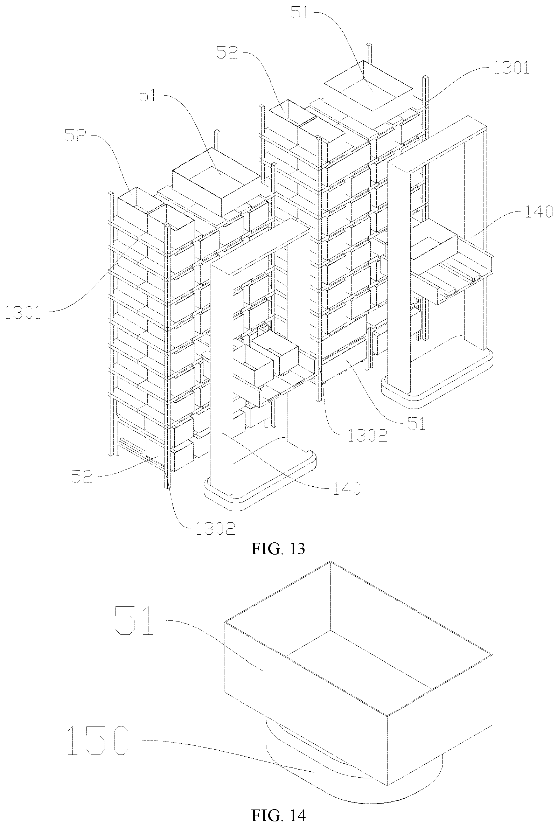

Embodiment 10 provides another warehouse scheduling system. As shown in FIG. 13 and FIG. 14, the system includes a movable carrier 1302, a fixed shelving unit 1301, an access device 140 and a first target carrying device 150.

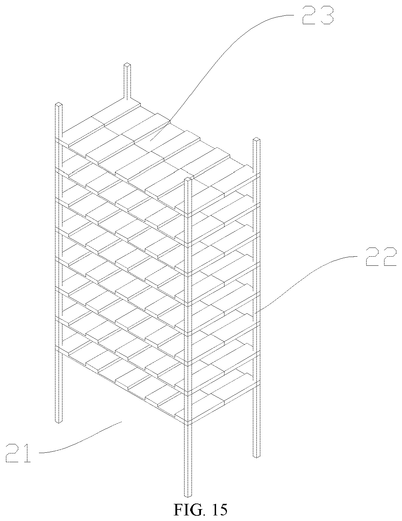

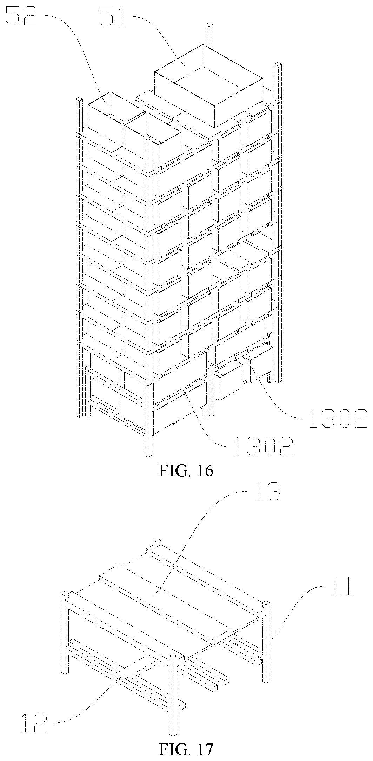

In an actual use process, the fixed shelving unit 1301 is usually kept stationary, and the movable carrier 1302 is driven by the first target carrying device 150 to move. As shown in FIG. 15 and FIG. 16, the fixed shelving unit 1301 and a bearing surface bearing the fixed shelving unit 1301 jointly define an accommodating area 21, and the accommodating area 21 is constructed to accommodate the movable carrier 1302.

The access device 140 is configured to carry a container between the fixed shelving unit 1301 and the movable carrier 1302. The first target carrying device 150 is configured to carry a container away from the movable carrier 1302 or carry a container onto the movable carrier 1302, or, carry the movable carrier 1302 away from the accommodating area 21 or carry the movable carrier into the accommodating area 21. When the access device 140 needs to carry a container between the fixed shelving unit 1301 and the movable carrier 1302, and the movable carrier 1302 needs to be located in the accommodating area 21.

It can be seen that, the access device 140 and the first target carrying device 150 form a top-storage bottom-picking working mode. Specifically, in a working procedure of the warehouse scheduling system, when a container needs to be stored, the first target carrying device 150 carries the container to the movable carrier 1302 located in the accommodating area 21, or carries the movable carrier 1302 with the container to the accommodating area 21, and then the access device 140 carries the container from the movable carrier 1302 to the fixed shelving unit 1301, to implement storage of the container.

When a container needs to be carried away, the access device 140 carries the container from the fixed shelving unit 1301 to the movable carrier 1302. Subsequently, when the container that needs to be carried can be separately carried away by the first target carrying device 150, the first target carrying device 150 may carry only the container. When the container that needs to be carried cannot be separately carried away by the first target carrying device 150, the first target carrying device 150 may be directly carried away by the movable carrier 1302.

Therefore, the warehouse scheduling system in this application can flexibly adjust a carried object according to an actual case, so that carrying requirements of different containers can be met, and carrying efficiency can be increased.

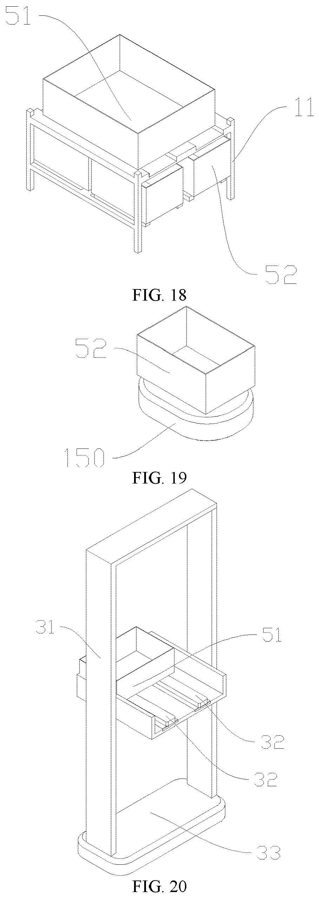

In an embodiment of this application, as shown in FIG. 17 and FIG. 18, the movable carrier 1302 includes a first support 11 and a comb tooth member 12 disposed on the first support 11. The comb tooth member 12 is constructed to bear a container. Specifically, the comb tooth member 12 includes a comb tooth frame and a plurality of comb teeth extending outward from the comb tooth frame, an interval is formed between adjacent comb teeth, and a container transversely spans an interval between comb teeth and is placed on two comb teeth.

The first target carrying device 150 is configured to: pass below the comb tooth member 12, and pass through an interval between two adjacent comb teeth of the comb tooth member 12, to lift a container on the comb tooth member 12 and carry away the container; or, the first target carrying device 150 is configured to: drive with a container into an interval between two adjacent comb teeth, place the container on the comb tooth member 12, and drive out. FIG. 14 and FIG. 19 are both schematic diagrams of a state that the first target carrying device 150 takes a container.

In this way, when a container needs to be carried, the first target carrying device 150 passes below the comb tooth member 12, and when moving below the container, passes through an interval between two adjacent comb teeth of the comb tooth member 12, to lift the container on the comb tooth member 12 and carry away the container. When a container needs to be placed, the first target carrying device 150 is configured to: drive with the container into an interval between two adjacent comb teeth, place the container on the comb tooth member 12, and drive out. It can be seen that the comb tooth member 12 and the first target carrying device 150 cooperate, so that a container can be placed and carried very conveniently.

In an embodiment of this application, as shown in FIG. 13, a first container 51 with a large width may transversely span two intervals between the comb teeth and be placed on two non-adjacent comb teeth. In addition, the first container 51 may include a container that transversely spans two grooves or notches and also spans two grooves or notches in a vertical direction in FIG. 1, or may include a container that transversely spans two grooves or notches and spans only one groove or notch in the vertical direction in FIG. 20.

In an embodiment of this application, the warehouse scheduling system may use at least two first target carrying devices 150 to carry a same container or a same movable carrier 1302. That is, a same container or a same movable carrier is carried through the coordination of at least two first target carrying devices 150.

When two first target carrying devices 150 are used to carry a same first container 51, after moving below the container, the two first target carrying devices 150 respectively pass through two intervals that the first container 51 transversely spans, lift the first container 51 on the comb tooth member 12, and carry the container away. When the first container 51 needs to be placed, the two first target carrying devices 150 may drive with the first container 51 above an interval between two adjacent comb teeth, place the first container 51 on the comb tooth member 12, and drive out.

In another embodiment, the warehouse scheduling system may use three or more first target carrying devices 150 to carry a same container. In this way, in a case that a container has a large size, two or more first target carrying devices 150 may be used to carry away the container, so that the container can be kept balanced when being carried, to keep the container from falling off the first target carrying device 150.

In the warehouse scheduling system in this application, when at least two first target carrying devices 150 are used to carry a same movable carrier 1302, the first target carrying devices 150 may support a bottom of the movable carrier 1302, to lift the movable carrier 1302, and then carry away the movable carrier 1302. Alternatively, the first target carrying devices 150 may pass through an interval between two adjacent comb teeth of the comb tooth member 12 and abut against a first laminate 13, to lift the movable carrier 1302, and then carry away the movable carrier 1302.

In this way, in a case that the movable carrier 1302 and a container on the movable carrier have large weights, two or more first target carrying devices 150 may be used to carry away the movable carrier 1302, so that a requirement of a carrying capability of the first target carrying device 150 is reduced.

As shown in FIG. 17, in an embodiment of this application, the comb tooth member 12 includes two groups of comb teeth extending in opposite directions, and each group of comb teeth is constructed to bear a container. In this way, the first target carrying device 150 may access a container in two directions of the movable carrier 1302, so that space utilization efficiency of the movable carrier 1302 can be improved.

In an embodiment of this application, the movable carrier 1302 includes at least two vertically disposed layers of comb tooth members 12, and intervals between comb teeth of the comb tooth members 12 are aligned in a vertical direction.

When a container on the comb tooth member 12 in an upper layer (that is, a non-bottom layer) needs to be taken off, the first target carrying device 150 may pass below the comb tooth member 12, pass through an interval between comb teeth in the layers of the comb tooth members 12 from a bottom, lift a container located on the comb tooth member 12 in the upper layer, and carry away the container.

When a container needs to be placed on the comb tooth member 12 in an upper layer, the first target carrying device 150 may enter from a side of the movable carrier 1302, pass through intervals between comb teeth of the comb tooth members 12 in the bottom layer and the upper layer from a side surface, and then place the container on the comb tooth member 12 in the upper layer. Through the arrangement of the plurality of layers of comb tooth members 12, the space utilization efficiency of the movable carrier 1302 can be effectively improved.

As shown in FIG. 17, in an embodiment of this application, the movable carrier 1302 further includes a first laminate 13, the first laminate 13 is disposed on the first support 11 and is located above the comb tooth member 12, and the first laminate 13 is constructed to be used for bearing at least one container. The intervals in the comb tooth member 12 need to be disposed fitting containers. For containers of different sizes, corresponding intervals have different widths, and each interval can only store a container within a corresponding size range. Therefore, the first laminate 13 is added to the movable carrier 1302 of this application, and a container that cannot be placed on the comb tooth member 12 may be placed on the first laminate 13. When a container placed on the first laminate 13 needs to be carried, the first target carrying device 150 may directly carry away the movable carrier 1302, so that carrying requirements of different container can also be met.

It can be seen that, in the movable carrier 1302 of this application, through the arrangement of the comb tooth member 12 and the first laminate 13, the intervals in the comb tooth member 12 adapt to sizes of common containers, and uncommon containers are placed on the first laminate 13, so that carrying requirements of different containers can be met, and carrying efficiency can be improved.

For the movable carrier 1302 in which the first laminate 13 is disposed in FIG. 17, in a working process of the warehouse scheduling system in this application, if one order corresponds to only one second container 52 with a small width, the access device 140 needs to place the second container 52 on the comb tooth member 12 of the movable carrier 1302, and one first target carrying device 150 carries away the second container 52.

If one order corresponds to only one first container 51 with a large width, the access device 140 also needs to place the first container 51 on the comb tooth member 12 of the movable carrier 1302, and at least one first target carrying device 150 carries away the first container 51.

When one order corresponds to at least two containers and all corresponding containers can be placed in a same movable carrier 1302, the access device 140 may place the containers at any positions in the movable carrier 1302, and then at least one first target carrying device 150 is used to directly carry away the movable carrier 1302.

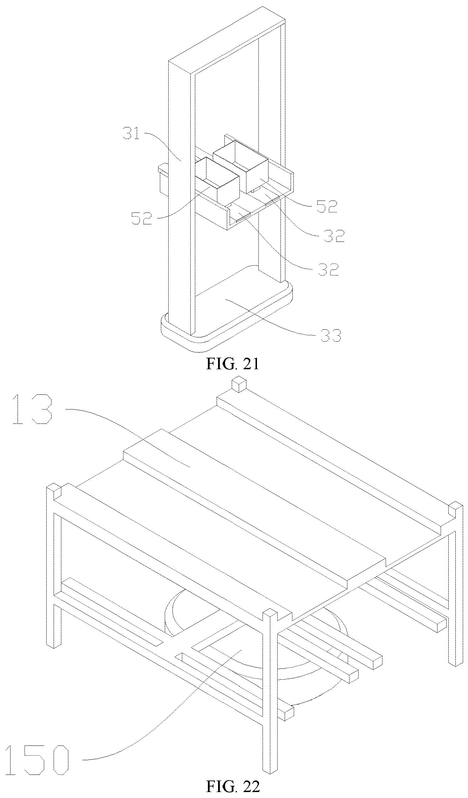

As shown in FIG. 20 and FIG. 21, in an embodiment of this application, the access device 140 is a cross-arm carrying device, and the first laminate 13 is provided with a groove or notch for allowing a telescopic fork 32 of the cross-arm carrying device to be inserted therein. Specifically, the cross-arm carrying device includes a first body 31, an elevation mechanism, and a telescopic fork 32. The elevation mechanism is disposed on the first body 31, and is configured to drive the telescopic fork 32 to move relatively. The telescopic fork 32 is configured to telescope in forward and backward directions, to cooperate with the elevation mechanism to fetch a container or place a container. The forward direction is a direction toward a shelving unit, and the backward direction is a direction away from a shelving unit.

When a container needs to be taken away from the movable carrier 1302, the elevation mechanism drives the telescopic fork 32 to elevate, to align the telescopic fork 32 with an interval between comb teeth below the container or with the groove or notch in the first laminate 13, and then the telescopic fork 32 extends forward to insert into the interval or insert into the groove or notch. The elevation mechanism then drives the telescopic fork 32 to rise, to separate the container from the comb tooth member 12 or the first laminate 13. The telescopic fork 32 retracts backward to take the container away from the movable carrier 1302.

When a container needs to be placed on the movable carrier 1302, the elevation mechanism drives the telescopic fork 32 to elevate, to drive the telescopic fork 32 to a position that is higher than that the comb tooth member 12 or the first laminate 13 and is aligned with the interval or with the groove or notch in a vertical direction, and then the telescopic fork 32 extends forward to transfer the container above the comb tooth member 12 or the first laminate 13. The elevation mechanism then drives the telescopic fork 32 to rise to drop the container on the comb tooth member 12 or the first laminate 13, and the telescopic fork 32 retracts backward, so that container placement work is completed.

It can be seen that the comb tooth member 12 of the movable carrier 1302 and the first laminate 13 cooperate with the first target carrying device 150, so that a container can be placed and carried very conveniently.

Correspondingly, as shown in FIG. 15 and FIG. 16, in an embodiment of this application, the fixed shelving unit 1301 includes a second support 22 and at least two second laminates 23 sequentially disposed at intervals on the second support 22 in a height direction, each second laminate 23 is constructed to bear a container, and the second laminate 23 is provided with a groove or notch for allowing a telescopic fork 32 of the cross-arm carrying device to be inserted therein.

The groove or notch in the second laminate 23 has a same shape as the groove or notch in the first laminate 13, and a process of carrying a container on the second laminate 23 by the cross-arm carrying device is the same as the process of carrying a container on the first laminate 13. Details are not described herein again.

As shown in FIG. 20 and FIG. 21, in an embodiment of this application, the cross-arm carrying device has at least two telescopic forks 32, and the cross-arm carrying device is constructed to jointly fork one first container 51 with two telescopic forks 32, or separately fork one second container 52 with one telescopic fork 32. In a width direction (that is, a horizontal direction, or a direction parallel to a bearing surface) of the groove or notch, the first container 51 is larger than the second container 52.

Correspondingly, as shown in FIG. 17 and FIG. 18, a plurality of grooves or notches are provided in the first laminate 13, the first container 51 can transversely span at least two grooves or notches, and the second container 52 can only transversely span one groove or notch.

The first container 51 is jointly carried by two telescopic forks 32, and when the cross-arm carrying device has at least three telescopic forks 32, the telescopic forks 32 used to carry the first container 51 may be adjacent telescopic forks 32, or may be non-adjacent telescopic forks 32. The second container 52 is carried by only one telescopic fork 32.

Because the first container 51 can transversely span at least two grooves or notches and the second container 52 can only transversely span one groove or notch, the containers may be sequentially arranged along grooves or notches, so that containers with different can be stored in units.

As shown in FIG. 15 to FIG. 18, in an embodiment of the present disclosure, two adjacent grooves or notches in the first laminate 13 and the second laminate 23 have a same horizontal spacing, so that containers on an entire laminate may be tightly arranged, thereby maximizing space utilization efficiency of the laminate.

In an embodiment of this application, the cross-arm carrying device is further constructed to simultaneously fork two second containers 52 respectively with two telescopic forks 32. In this way, the two telescopic forks 32 may work simultaneously, and do not need to work separately, so that working efficiency of the telescopic fork 32 can be improved.

In another embodiment of this application, the access device is a telescopic arm carrying device, the telescopic arm carrying device includes a first body, an elevation mechanism, a load tray, and two telescopic arms, and the elevation mechanism is disposed on the first body, and is configured to drive the load tray and the two telescopic arms to elevate relative to the first body, the two telescopic arms are disposed on the load tray, and can telescope in a longitudinal direction; and a front finger and a rear finger are disposed on each of the two telescopic arms, the front finger is rotatably disposed at a front end of the telescopic arm, and is driven by a finger motor to rotate with respect to the telescopic arm to extend into the telescopic arm, or rotate to an outer side of the telescopic arm, and the rear finger is fixedly disposed behind the telescopic arm. It is to be noted that orientation terms "inside and outside" used herein are set with a space formed between the two telescopic arms as a reference, and respectively representing being located inside the space formed between the two telescopic arms and located outside the space formed between the two telescopic arms.

When the access device takes out a container from a shelving unit, the two telescopic arms extend toward the shelving unit with respect to the load tray to insert into two sides of the container on the shelving unit, then the finger motor drives the front finger to rotate toward inner sides of the telescopic arms to abut against a rear end of the container. The two telescopic arms contract again in opposite directions with respect to the load tray to pull the container to the load tray.

When the access device places a container back to a shelving unit, the two telescopic arms extend toward the shelving unit with respect to the load tray to the rear finger to push the container to a designated position on the shelving unit, and then the telescopic arms contract to the load tray for access of a container a next time.

Correspondingly, when the access device is a telescopic arm carrying device, the second laminate 23 may be a continuously extending plane, and is provided with no groove or notch. In this way, the two telescopic arms of the telescopic arm carrying device can also hold the container from left and right side surfaces and carry the container.

When the telescopic arm carrying device needs to carry containers with different widths, in the telescopic arm carrying device, the two telescopic arms may be arranged with an adjustable spacing. In this way, the telescopic arm carrying device can adjust the spacing between the two telescopic arms according to a width of a container, and then hold the container from left and right side surfaces and carry the container. Certainly, in another embodiment of this application, a suction cup carrying device, a conveyor belt carrying device or another type of carrying device may be used. For a specific device structure and a carrying process of the carrying device, details are not described herein again.

As shown in FIG. 16, in an embodiment of this application, the warehouse scheduling system includes at least two movable carriers 1302 placed in the accommodating area 21 side by side. In this way, a same fixed shelving unit 1301 may be used in combination with at least two movable carriers 1302, so that carrying requirements can be met more flexibly.

In an embodiment of this application, the access device 140 may further include a walking mechanism 33, so that the access device 140 can carry a container between the fixed shelving unit 1301 and the movable carrier 1302, and can further carry a container between another position and the fixed shelving unit 1301 or the movable carrier 1302.

In an embodiment of this application, the first target carrying device 150 includes a second body, a second walking mechanism, and a bearing tray. The bearing tray is movably disposed on the second body, and is configured to: rise with respect to the second body, and pass through an interval between two adjacent comb teeth of the comb tooth member 12 to lift a container, or descend with respect to the second body, and place a container located on the bearing tray onto the comb tooth member 12.

In an embodiment of this application, the first target carrying device 150 further includes an elevation mechanism and a driving motor, a bottom end of the elevation mechanism is disposed on the second body, the bearing tray is disposed at a top end of the elevation mechanism, and the elevation mechanism is configured to drive the bearing tray to elevate with respect to the second body; and the driving motor is configured to drive the elevation mechanism to drive the bearing tray to elevate with respect to the second body. The elevation mechanism may be a hydraulic cylinder or a gas cylinder.

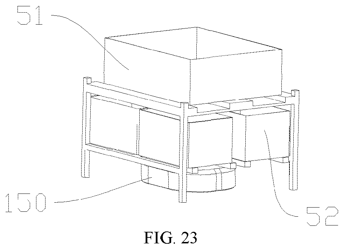

The first target carrying device 150 may lift the movable carrier 1302 by using a plurality of methods. In an embodiment of the present disclosure, as shown in FIG. 22 and FIG. 23, the first target carrying device 150 is configured to support a bottom of the movable carrier 1302, to lift the movable carrier 1302. In another embodiment of the present disclosure, the first target carrying device 150 is further configured to: pass through an interval between two adjacent comb teeth of the comb tooth member 12, and abut against the first laminate 13, to lift the movable carrier 1302.

It can be seen that, the first target carrying device 150 may use a plurality of methods to lift the movable carrier 1302, and the methods are all very convenient. In addition, a corresponding method may be selected according to a specific structure of the movable carrier 1302, thereby improving the applicability of the first target carrying device 150.

In summary, in the warehouse scheduling system in this application, the movable carrier 1302 and the fixed shelving unit 1301 may store containers of various different sizes in a mixed manner. A same access device 140 may carry a container of a small size, or may carry a container of a large size. That is, a same access device 140 may implement mixing and sorting of containers of different sizes.

In this way, the shelving unit in this application can store large and small containers in a mixed manner, that is, store different types of containers in a same area, and it is not necessary to separately arrange different types of shelving units for storage. The access device 140 in the present disclosure can complete carrying and storage work of containers of various sizes on a same fixed shelving unit 1301 or a same movable carrier 1302 without cross-area operation, so that operation efficiency is improved.

Embodiments of this application are described above. Other embodiments fall within the scope of the appended claims. In some embodiments, the actions or steps recorded in the claims may be performed in sequences different from those in the embodiments and an expected result may still be achieved. In addition, the processes depicted in the accompanying drawings is not necessarily performed in the specific order or successively to achieve an expected result. In some implementations, multitasking and parallel processing may be feasible or beneficial.

It is noted that for each of the foregoing embodiments, for ease of description, the method embodiment is described as a series of action combinations, but a person skilled in the art should learn that this application is not limited to an order of described actions, because according to this application, some steps may be performed in another order or at the same time. In addition, a person skilled in the art should also know that all the embodiments described in this specification are exemplary embodiments, and the related actions and modules are not necessarily required in this application.

In the foregoing embodiments, the descriptions of the embodiments have respective focuses. For a part that is not described in detail in an embodiment, refer to related descriptions in other embodiments.

The above disclosed preferred embodiments of this application are intended only to assist in describing this application. Optional embodiments are not an exhaustive description of all details, nor do they limit the resent utility model to the specific implementations only. Obviously, many modifications and variations may be made in accordance with the content of this application. These embodiments are selected and described in detail in this application in order to better explain the principles and practical applications of this application, so that a person skilled in the art can well understand and utilize this application. This application is limited only by the claims and their entire scope and equivalents.

## Claims

1. A warehouse scheduling system, wherein the system comprises a control server (110), a carrying device (150), an inventory area (120), and a container handling device (170), the inventory area (120) at least comprises a plurality of movable carriers (1302), each movable carrier (1302) comprises at least one storage position, and each storage position is capable of accommodating at least one article;
the control server (110) is configured to: determine a first target article on a first target movable carrier (1302) and a current storage position and a target position of the first target article, determine a first target carrying device (150) used for carrying the first target movable carrier (1302) and a target container handling device (170), send a carrying instruction to the first target carrying device (150), and send a handling instruction to the target article handling device (170);
the first target carrying device (150) is configured to carry the first target movable carrier (1302) on which the first target article is placed to a destination in response to the carrying instruction; and
the target container handling device (170) is located at the destination, and is configured to, in response to the handling instruction, take out the first target article from the current storage position and place the first target article at the target position;
**characterized in that** the container handling device (170) comprises a shelf body (7), the shelf body (7) is provided with an article access assembly (2) and a bearing assembly, and the article access assembly (2) is configured to move on the shelf body (7); the shelf body (7) comprises an X-axis track (71) and a Y-axis track (72) that are perpendicular to each other; and the article access assembly (2) is configured to take out an article from a movable carrier (1302) in a Z-axis direction that is perpendicular to both the X-axis track (71) and the Y-axis track (72) and load the article onto the bearing assembly, or unload an article from the bearing assembly and place the article on the movable carrier (1302);
the movable carrier (1302) is a movable shelving unit, the movable shelving unit comprises at least one laminate (13022), the at least one laminate (13022) divides the movable shelving unit into at least two layers, and at least one storage position is disposed on the laminate (13022) of the movable shelving unit;
the container handling device (170) comprises a first sensor, and the first sensor is used for determining whether an article is present at a storage position in the movable shelving unit when the article handling device (170) is to take out an article from the movable shelving unit and/or determining whether a storage position in the movable shelving unit is empty when the container handling device (170) is to place an article at the storage position in the movable shelving unit;
the container handling device (170) further comprises a second sensor, and the second sensor is used for determining a pose deviation between the container handling device (170) and a container on the movable shelving unit; and
the container handling device (170) is further used for adjusting a pose of the container handling device (170) according to a pose deviation between the container handling device (170) and a corresponding article position determined by the second sensor if the pose deviation is greater than or equal to a preset tolerance threshold, to make the pose deviation less than the preset tolerance threshold.

2. The warehouse scheduling system according to claim 1, wherein the target position is a storage position in the first target movable carrier (1302) or a storage position in another movable carrier (1302) other than the first target movable carrier (1302); and
the article that the storage position is capable of accommodating comprises a container, and the control server (110) is further configured to determine a new storage position for a first target container according to any one selected from the group consisting of popularity of a good stored in the first target container, a degree of correlation between the good stored in the first target container and a good stored in another container, whether a to-be-processed task involves the good stored in the first target container, and distances between a target container handling device (170) and storage positions in movable carriers (1302) located at a destination.

3. The warehouse scheduling system according to claim 1, wherein the target position is a storage position in another movable carrier (1302) other than the first target movable carrier (1302), and the target position is a storage position in a second target movable carrier (1302);
the control server (110) is further configured to: determine a storage position in the second target movable carrier (1302) for the first target article, determine a second target carrying device used for carrying the second target movable carrier (1302), and send a carrying instruction to the second target carrying device;
the second target carrying device is configured to carry the second target movable carrier (1302) to a destination in response to the carrying instruction; and
the target container handling device (170) is further configured to, in response to the handling instruction, take out the first target article from a current storage position in the first target movable carrier (1302) and place the first target article at the storage position in the second target movable carrier (1302).

4. The warehouse scheduling system according to claim 1, wherein the control server (110) is further configured to: determine a second target article located in a handling area and a storage position in a third target movable carrier (1302), determine a third target carrying device used for carrying the third target movable carrier (1302), send a carrying instruction to the third target carrying device, and send a handling instruction to the target container handling device (170);
the third target carrying device is configured to carry the third target movable carrier (1302) to the handling area in response to the carrying instruction; and
the target container handling device (170) is located in the handling area, and is configured to, in response to the handling instruction, take out the second target article from the handling area and place the second target article at the storage position in the third target movable carrier (1302);
preferably wherein
the control server (110) is further configured to determine a new storage position for the second target article in response to at least one selected from the group consisting of a take-off task, a sorting task, and a put-on task.

5. The warehouse scheduling system according to claim 1, wherein the system further comprises an access device (140) and a plurality of fixed shelving units (1301), each fixed shelving unit (1301) comprises at least one partition, the at least one partition divides the fixed shelving unit (1301) into at least two layers, the movable carrier (1302) is located in a bottom one among the at least two layers of the fixed shelving unit (1301), at least one storage position is disposed at the partition of the fixed shelving unit (1301), and each storage position is capable of accommodating at least one article.

6. The warehouse scheduling system according to claim 5, wherein the target position is a temporary storage position at a workstation (160);
the control server (110) is further configured to: determine a storage position in a target fixed shelving unit (1301) for the first target article, determine a target access device (140) used for accessing the first target article, and send an access instruction to the target access device (140);
the target container handling device (170) is further configured to, in response to the handling instruction, take out the first target article from the current storage position and place the first target article at the temporary storage position; and
the target access device (140) is configured to, in response to the access instruction, move to the temporary storage position, take out the first target article from the temporary storage position, move to the target fixed shelving unit (1301), and place the first target article at a storage position in the target fixed shelving unit (1301).

7. The warehouse scheduling system according to claim 5, wherein the target position is a temporary storage position at a workstation (160);
the control server (110) is further configured to: determine a third target article on a target fixed shelving unit (1301), a current storage position for the third target article, and a storage position in a fourth target movable carrier (1302) for the third target article, determine a target access device (140) used for accessing the third target article and a fourth target carrying device used for carrying the fourth target movable carrier (1302), send an access instruction to the target access device (140), send a carrying instruction to the fourth target carrying device, and send a handling instruction to the target container handling device (170);
the target access device (140) is configured to, in response to the access instruction, move to the target fixed shelving unit (1301), take out the third target article, carry the third target article to a destination, and store the third target article at a temporary storage position at the destination;
the fourth target carrying device is configured to carry the fourth target movable carrier (1302) to the destination in response to the carrying instruction; and
the target container handling device (170) is configured to, in response to the handling instruction, take out the third target article from the temporary storage position and place the third target article on the fourth target movable carrier (1302) carried by the fourth target carrying device.

8. The warehouse scheduling system according to any one of claims 1 to 7, wherein
the movable shelving unit comprises at least one connection layer (130201), and an article located in the connection layer (130201) is capable of being operated by the access device (140) or operated by the article handling device (170); and
the movable shelving unit further comprises a non-connection layer (130201) other than the connection layer (130201), and an article located in the non-connection layer (130202) is only operated by the container handling device (170);
preferably wherein
the target container handling device (170) is further configured to switch a position of an article on the movable shelving unit within the connection layer (130201), within the non-connection layer (130202), or between the connection layer (130201) and the non-connection layer (130202).

9. The warehouse scheduling system according to any one of claims 1 to 7, wherein
the article handling device is further used for adjusting the pose of the article handling device according to the pose deviation to eliminate the pose deviation.

10. The warehouse scheduling system according to any one of claims 1 to 7, wherein the target article handling device (170) is located at the workstation (160), a transmission line is disposed at the workstation (160), a picking working position is located in a transmission path of the transmission line, the transmission line comprises a transmission line inlet and a transmission line outlet, and the target container handling device (170) is disposed at each of the transmission line inlet and the transmission line outlet;
the target container handling device (170) located at the transmission line inlet is further configured to take out the first target article from the current storage position and place the first target article on the transmission line; and
the target container handling device (170) located at the transmission line outlet is further configured to take out the first target article from the transmission line outlet and place the first target article at the target position, wherein the target position is the storage position in the first target movable carrier (1302) or the storage position in another movable carrier (1302) other than the first target movable carrier (1302).

11. The warehouse scheduling system according to any one of claims 1 to 7, wherein
the movable carrier (1302) is a movable shelving unit, the movable shelving unit comprises at least one laminate (13022), the at least one laminate (13022) divides the movable shelving unit into at least two layers, and at least one storage position is disposed on the laminate (13022) of the movable shelving unit;
preferably wherein
the movable shelving unit is a two-sided shelving unit;
the control server (110) is further configured to: determine that the current storage position and the target position of the first target article are located on opposite sides of the first target movable shelving unit, and send a shelving unit turnaround instruction to the target carrying devices (150);
the target carrying devices (150) are further configured to carry the first target movable shelving unit to perform a shelving unit turnaround operation in response to the shelving unit turnaround instruction after the target article handling device (170) takes out the first target article; and
the target container handling device (170) is further configured to place the target article at the target position.

12. The warehouse scheduling system according to claim 5, wherein the fixed shelving unit (1301) and a bearing surface bearing the fixed shelving unit (1301) jointly define an accommodating area (21), and the accommodating area (21) is constructed to accommodate the movable carrier (1302);
the access device (140) is configured to carry an article between the fixed shelving unit (1301) and the movable carrier (1302); and
the first target carrying device (150) is further configured to: carry an article away from the movable carrier (1302) or carry an article onto the movable carrier (1302); and/or, carry the movable carrier (1302) away from the accommodating area (21) or carry the movable carrier (1302) into the accommodating area (21);
preferably wherein
the movable carrier (1302) comprises a first support (11) and a comb tooth member (12) disposed on the first support (11), and the comb tooth member (12) is constructed to bear an article; and
the first target carrying device (150) is configured to: pass below the comb tooth member (12), and pass through an interval between two adjacent comb teeth of the comb tooth member (12), to lift an article on the comb tooth member (12) and carry away the article; or, the first target carrying device (150) is configured to: drive with an article into an interval between two adjacent comb teeth, place the article on the comb tooth member (12), and drive out.

13. The warehouse scheduling system according to claim 5, wherein
the fixed shelving unit (1301) and a bearing surface bearing the fixed shelving unit (1301) jointly define an accommodating area (21), and the accommodating area (21) is constructed to accommodate the movable carrier (1302);
the access device (140) is configured to carry an article between the fixed shelving unit (1301) and the movable carrier (1302);
the first target carrying device (150) is further configured to: carry an article away from the movable carrier or carry an article onto the movable carrier (1302); and/or, carry the movable carrier (1302) away from the accommodating area (21) or carry the movable carrier (1302) into the accommodating area (21);
the movable carrier (1302) comprises a first support (11) and a comb tooth member (12) disposed on the first support (11), and the comb tooth member (12) is constructed to bear an article;
the first target carrying device (150) is configured to: pass below the comb tooth member (12), and pass through an interval between two adjacent comb teeth of the comb tooth member (12), to lift an article on the comb tooth member (12) and carry away the article; or, the first target carrying device (150) is configured to: drive with an article into an interval between two adjacent comb teeth, place the article on the comb tooth member (12), and drive out; and
the first target carrying device (150) comprises:
a second body;
a second walking mechanism, wherein the second walking mechanism is disposed on the second body, and is configured to drive the second body to walk; and
a bearing tray, wherein the bearing tray is movably disposed on the second body, and is configured to: rise with respect to the second body and pass through an interval between two adjacent comb teeth of the comb tooth member (12) to lift an article, or descend with respect to the second body and place an article located on the bearing tray onto the comb tooth member (12);
preferably wherein
the first target carrying device (150) further comprises:
an elevation mechanism, wherein a bottom end of the elevation mechanism is disposed on the second body, the bearing tray is disposed at a top end of the elevation mechanism, and the elevation mechanism is configured to drive the bearing tray to elevate with respect to the second body; and
a driving motor, wherein the driving motor is configured to drive the elevation mechanism to drive the bearing tray to elevate with respect to the second body.

14. A warehouse scheduling method, wherein the method is applied to a warehouse scheduling system, the system comprises a control server (110), an access device (140), a carrying device (150), an inventory area (120), and an container handling device (170), the inventory area (120) at least comprises a plurality of fixed shelving units (1301) and a plurality of movable carriers (1302), each fixed shelving unit (1301) comprises at least one partition, the at least one partition divides the fixed shelving unit (1301) into at least two layers, each movable carrier (1302) is located in a bottom layer of the fixed shelving unit (1301), at least one storage position is disposed at the partition of the fixed shelving unit (1301), and each storage position is capable of accommodating at least one article; and the movable carrier (1302) comprises at least one storage position, each storage position is capable of accommodating at least one article, and the article that the storage position is capable of accommodating comprises a container; and
the method comprises:
determining, by the control server (110) according to an order task, a target fixed shelving unit (1301) on which a target container that accommodates an order good is currently located and a target movable carrier (1302) onto which the target container is about to be placed, wherein the target movable carrier (1302) has a storage position used for allowing the target container to be placed thereon, determining, by the control server (110), a target access device (140) used for accessing the target container, a target carrying device (150) used for carrying the target movable carrier (1302), and a target cargo box handling device used for handling the target cargo box, sending, by the control server (110), an access instruction to the target access device (140), sending, by the control server (110), a carrying instruction to the target carrying device (150), and sending, by the control server (110), a handling instruction to the target cargo box handling device;
in response to the access instruction, moving the target access device (140) to the target fixed shelving unit (1301) and taking out, by the target access device (140), the target container from the target fixed shelving unit (1301) and placing, by target access device (140), the target container at a storage position in the target movable carrier (1302) or taking out, by the target access device (140), the target container from a storage position in the target movable carrier (1302) and placing, by target access device (140), the target container at a storage position in the target fixed shelving unit (1301);
carrying, by the target carrying device (150), the target movable carrier (1302) on which the target container is placed to a destination in response to the carrying instruction; and
in response to the handling instruction, taking out, by the target container handling device (170) located at the destination, a target container from the target movable carrier (1302) carried by the target carrying device (150) or placing, by the target container handling device (170), a target container on the target movable carrier (1302) carried by the target carrying device (150);
**characterized in that**
the container handling device (170) comprises a shelf body (7), the shelf body (7) is provided with an article access assembly (2) and a bearing assembly, and the article access assembly (2) is configured to move on the shelf body (7); and the shelf body (7) comprises an X-axis track (71) and a Y-axis track (72) that are perpendicular to each other;
the warehouse scheduling method further comprises:
taking out, by the article access assembly (2), an article from a movable carrier (1302) in a Z-axis direction that is perpendicular to both the X-axis track (71) and the Y-axis track (72) and loading, by the article access assembly (2), the article onto the bearing assembly, or unloading, by the article access assembly (2), an article from the bearing assembly and placing, by the article access assembly (2), the article on the movable carrier (1302);
wherein the movable carrier (1302) is a movable shelving unit, the movable shelving unit comprises at least one laminate (13022), the at least one laminate (13022) divides the movable shelving unit into at least two layers, and at least one storage position is disposed on the laminate (13022) of the movable shelving unit; and the container handling device (170) comprises a first sensor and a second sensor;
the warehouse scheduling method further comprises:
determining, by the first sensor, whether an article is present at a storage position in the movable shelving unit when the container handling device (170) is to take out an article from the movable shelving unit and/or determining, by the first sensor, whether a storage position in the movable shelving unit is empty when the container handling device (170) is to place an article at the storage position in the movable shelving unit;
determining, by the second sensor, a pose deviation between the container handling device (170) and a container on the movable shelving unit; and
adjusting, by the container handling device (170), a pose of the container handling device (170) according to a pose deviation between the container handling device (170) and a corresponding article position determined by the second sensor if the pose deviation is greater than or equal to a preset tolerance threshold, to make the pose deviation less than the preset tolerance threshold.

15. The warehouse scheduling method according to claim 14, wherein the method further comprises:
scheduling, by the control server (110), the access device (140) to switch a position of a first target article between storage positions in the fixed shelving unit (1301), and scheduling, by the control server (110), the access device (140) to switch a position of the first target article between the storage position in the fixed shelving unit (1301) and the storage position in the movable carrier (1302); and/or, scheduling, by the control server (110), the container handling device (170) to switch a position of the first target article between storage positions in the movable carrier (1302); or
the method further comprises:
in response to a sorting task, scheduling, by the control server (110), the access device (140) to adjust the first target article from an original storage position in the fixed shelving unit (1301) to another storage position in the fixed shelving unit (1301) or keep the first target article remaining at the original storage position; scheduling, by the control server (110), the access device (140) to adjust the first target article from an original storage position in the fixed shelving unit (1301) to another storage position in the movable carrier (1302); scheduling, by the control server (110), the access device (140) to adjust the first target article from an original storage position in the movable carrier (1302) to another storage position in the fixed shelving unit (1301); and/or, scheduling, by the control server (110), the container handling device (170) to adjust the first target article from an original storage position in the movable carrier (1302) to another storage position in the movable carrier (1302) or keep the first target article remaining at the original storage position in the movable carrier (1302).

## Patentansprüche

1. Lager-Planungssystem, wobei das System einen Steuerungsserver (110), eine Transportvorrichtung (150), einen Lagerbereich (120) und eine Behälter-Handhabungsvorrichtung (170) aufweist, wobei der Lagerbereich (120) mindestens eine Vielzahl von beweglichen Trägern (1302) aufweist, jeder bewegliche Träger (1302) mindestens eine Lagerposition aufweist und jede Lagerposition mindestens einen Artikel aufnehmen kann;
der Steuerungsserver (110) so konfiguriert ist, dass er: einen ersten Zielartikel auf einem ersten beweglichen Ziel-Träger (1302) sowie eine aktuelle Lagerposition und eine Zielposition des ersten Zielartikels ermittelt, eine erste Ziel-Transportvorrichtung (150), die zum Tragen des ersten beweglichen Ziel-Trägers (1302) verwendet wird, sowie eine Ziel-Behälter-Handhabungsvorrichtung (170) ermittelt, eine Transportanweisung an die erste Ziel-Transportvorrichtung (150) sendet und eine Handhabungsanweisung an die Ziel-Behälter-Handhabungsvorrichtung (170) sendet;
die erste Ziel-Transportvorrichtung (150) so konfiguriert ist, dass sie den ersten beweglichen Ziel-Träger (1302), auf dem der erste Zielartikel platziert ist, als Reaktion auf die Transportanweisung zu einem Zielort transportiert; und
die Ziel-Behälter-Handhabungsvorrichtung (170) sich am Zielort befindet und so konfiguriert ist, dass sie als Reaktion auf die Handhabungsanweisung den ersten Zielartikel aus der aktuellen Lagerposition entnimmt und den ersten Zielartikel an der Zielposition ablegt;
**dadurch gekennzeichnet, dass**
die Behälter-Handhabungsvorrichtung (170) einen Regalkörper (7) aufweist, der Regalkörper (7) mit einer Artikelzugriffseinheit (2) und einer Lagereinheit versehen ist und die Artikelzugriffseinheit (2) so ausgelegt ist, dass sie sich auf dem Regalkörper (7) bewegt; der Regalkörper (7) eine X-Achsen-Führung (71) und eine Y-Achsen-Führung (72) aufweist, die senkrecht zueinander stehen; und die Artikelzugriffseinheit (2) so ausgelegt ist, dass sie einen Artikel aus einem beweglichen Träger (1302) in einer Z-Achsen-Richtung, die sowohl zur X-Achsen-Führung (71) als auch zur Y-Achsen-Führung (72) senkrecht ist, entnimmt und den Artikel auf der Lagereinheit ablegt oder einen Artikel von der Lagereinheit entlädt und den Artikel auf den beweglichen Träger (1302) ablegt;
der bewegliche Träger (1302) eine bewegliche Regaleinheit ist, die bewegliche Regaleinheit mindestens eine Einlegebodenplatte (13022) aufweist, die mindestens eine Einlegebodenplatte (13022) die bewegliche Regaleinheit in mindestens zwei Ebenen unterteilt, und mindestens eine Lagerposition auf der Einlegebodenplatte (13022) der beweglichen Regaleinheit angeordnet ist;
die Behälter-Handhabungsvorrichtung (170) einen ersten Sensor aufweist, und der erste Sensor dazu dient, festzustellen, ob sich ein Artikel an einer Lagerposition im beweglichen Regalsystem befindet, wenn die Behälter-Handhabungsvorrichtung (170) einen Artikel aus dem beweglichen Regalsystem entnehmen soll, und/oder festzustellen, ob eine Lagerposition im beweglichen Regalsystem leer ist, wenn die Behälter-Handhabungsvorrichtung (170) einen Artikel an der Lagerposition im beweglichen Regalsystem ablegen soll;
die Behälter-Handhabungsvorrichtung (170) des Weiteren einen zweiten Sensor aufweist, und der zweite Sensor zur Ermittlung einer Lageabweichung zwischen der Behälter-Handhabungsvorrichtung (170) und einem Behälter auf der beweglichen Regaleinheit verwendet wird; und
die Behälter-Handhabungsvorrichtung (170) des Weiteren dazu verwendet wird, eine Lage der Behälter-Handhabungsvorrichtung (170) entsprechend einer Lageabweichung zwischen der Behälter-Handhabungsvorrichtung (170) und einer vom zweiten Sensor ermittelten entsprechenden Artikelposition anzupassen, wenn die Lageabweichung größer oder gleich einem voreingestellten Toleranzschwellenwert ist, um die Lageabweichung unter den voreingestellten Toleranzschwellenwert zu bringen.

2. Lager-Planungssystem gemäß Anspruch 1, bei dem die Zielposition eine Lagerposition im ersten beweglichen Ziel-Träger (1302) oder eine Lagerposition in einem anderen beweglichen Träger (1302) als dem ersten beweglichen Ziel-Träger (1302) ist; und
der Artikel, den die Lagerposition aufnehmen kann, einen Behälter aufweist, und der Steuerungsserver (110) des Weiteren so konfiguriert ist, dass er eine neue Lagerposition für einen ersten Zielbehälter ermittelt, basierend auf einem beliebigen Kriterium aus der Gruppe bestehend aus der Beliebtheit einer im ersten Zielbehälter gelagerten Ware, dem Korrelationsgrad zwischen der im ersten Zielbehälter gelagerten Ware und einer in einem anderen Behälter gelagerten Ware, der Frage, ob eine zu bearbeitende Aufgabe die im ersten Zielbehälter gelagerte Ware betrifft, sowie den Entfernungen zwischen einer Ziel-Behälter-Handhabungsvorrichtung (170) und Lagerpositionen in beweglichen Trägern (1302), die sich an einem Bestimmungsort befinden.

3. Lager-Planungssystem gemäß Anspruch 1, bei dem die Zielposition eine Lagerposition in einem anderen beweglichen Träger (1302) als dem ersten beweglichen Ziel-Träger (1302) ist und die Zielposition eine Lagerposition in einem zweiten beweglichen Ziel-Träger (1302) ist;
der Steuerungsserver (110) des Weiteren so konfiguriert ist, dass er: eine Lagerposition im zweiten beweglichen Ziel-Träger (1302) für den ersten Zielartikel ermittelt, eine zweite Ziel-Transportvorrichtung ermittelt, die zum Transportieren des zweiten beweglichen Ziel-Trägers (1302) verwendet wird, und eine Transportanweisung an die zweite Ziel-Transportvorrichtung sendet;
die zweite Ziel-Transportvorrichtung so konfiguriert ist, dass sie den zweiten beweglichen Ziel-Träger (1302) als Reaktion auf die Transportanweisung zu einem Zielort transportiert; und
die Ziel-Behälter-Handhabungsvorrichtung (170) des Weiteren so konfiguriert ist, dass sie als Reaktion auf die Handhabungsanweisung den ersten Zielartikel aus einer aktuellen Lagerposition im ersten beweglichen Ziel-Träger (1302) entnimmt und den ersten Zielartikel an der Lagerposition im zweiten beweglichen Ziel-Träger (1302) ablegt.

4. Lager-Planungssystem gemäß Anspruch 1, bei dem der Steuerungsserver (110) des Weiteren so konfiguriert ist, dass er: einen zweiten Zielartikel, der sich in einem Bearbeitungsbereich befindet, und eine Lagerposition in einem dritten beweglichen Ziel-Träger (1302) ermittelt, eine dritte Ziel-Transportvorrichtung ermittelt, die zum Transportieren des dritten beweglichen Ziel-Trägers (1302) verwendet wird, eine Transportanweisung an die dritte Ziel-Transportvorrichtung sendet und eine Handhabungsanweisung an die Ziel-Behälter-Handhabungsvorrichtung (170) sendet;
die dritte Ziel-Transportvorrichtung so ausgelegt ist, dass sie den dritten beweglichen Ziel-Träger (1302) als Reaktion auf die Transportanweisung in den Handhabungsbereich transportiert; und
die Ziel-Behälter-Handhabungsvorrichtung (170) sich im Handhabungsbereich befindet und so ausgelegt ist, dass sie als Reaktion auf die Handhabungsanweisung den zweiten Zielartikel aus dem Handhabungsbereich entnimmt und den zweiten Zielartikel an der Lagerposition im dritten beweglichen Ziel-Träger (1302) ablegt;
wobei vorzugsweise
der Steuerungsserver (110) des Weiteren so ausgelegt ist, dass er als Reaktion auf mindestens eine Aufgabe, die aus der Gruppe ausgewählt ist, die aus einer Entnahmeaufgabe, einer Sortieraufgabe und einer Einlagerungsaufgabe besteht, eine neue Lagerposition für den zweiten Zielartikel bestimmt.

5. Lager-Planungssystem gemäß Anspruch 1, bei dem das System ferner eine Zugriffsvorrichtung (140) und eine Vielzahl von ortsfesten Regaleinheiten (1301) aufweist, wobei jede ortsfeste Regaleinheit (1301) mindestens eine Trennwand aufweist, die mindestens eine Trennwand die ortsfeste Regaleinheit (1301) in mindestens zwei Ebenen unterteilt, der bewegliche Träger (1302) sich in einer unteren der mindestens zwei Ebenen der ortsfesten Regaleinheit (1301) befindet, mindestens eine Lagerposition an der Trennwand der ortsfesten Regaleinheit (1301) angeordnet ist und jede Lagerposition mindestens einen Artikel aufnehmen kann.

6. Lager-Planungssystem nach Anspruch 5, bei dem die Zielposition eine Zwischenlagerposition an einer Arbeitsstation (160) ist;
der Steuerungsserver (110) des Weiteren so konfiguriert ist, dass er: einen Lagerplatz in einer ortsfesten Ziel-Regaleinheit (1301) für den ersten Zielartikel bestimmt, eine Ziel-Zugriffsvorrichtung (140) bestimmt, die für den Zugriff auf den ersten Zielartikel verwendet wird, und ein Zugriffsanweisung an die Ziel-Zugriffsvorrichtung (140) sendet;
die Ziel-Behälter-Handhabungsvorrichtung (170) des Weiteren so konfiguriert ist, dass sie als Reaktion auf die Handhabungsanweisung den ersten Zielartikel aus der aktuellen Lagerposition entnimmt und den ersten Zielartikel an der Zwischenlagerposition ablegt; und
die Ziel-Zugriffsvorrichtung (140) so konfiguriert ist, dass sie als Reaktion auf die Zugriffsanweisung zur Zwischenlagerposition fährt, den ersten Zielartikel aus der Zwischenlagerposition entnimmt, zur ortsfesten Ziel-Regaleinheit (1301) fährt und den ersten Zielartikel an einer Lagerposition in der ortsfesten Ziel-Regaleinheit (1301) ablegt.

7. Lager-Planungssystem gemäß Anspruch 5, bei dem die Zielposition eine Zwischenlagerposition an einer Arbeitsstation (160) ist;
der Steuerungsserver (110) des Weiteren so konfiguriert ist, dass er: einen dritten Zielartikel auf einer ortsfesten Ziel-Regaleinheit (1301) ermittelt, eine aktuelle Lagerposition für den dritten Zielartikel sowie eine Lagerposition in einem vierten beweglichen Ziel-Träger (1302) für den dritten Zielartikel ermittelt, eine Ziel-Zugriffsvorrichtung (140), die zum Zugriff auf den dritten Zielartikel verwendet wird, und eine vierte Ziel-Transportvorrichtung, die zum Transportieren des vierten beweglichen Ziel-Trägers (1302) verwendet wird, ermittelt, eine Zugriffsanweisung an die Ziel-Zugriffsvorrichtung (140) sendet, eine Transportanweisung an die vierte Ziel-Transportvorrichtung sendet und eine Handhabungsanweisung an die Ziel-Behälter-Handhabungsvorrichtung (170) sendet;
die Ziel-Zugriffsvorrichtung (140) so konfiguriert ist, dass sie als Reaktion auf die Zugriffsanweisung zur ortsfesten Ziel-Regaleinheit (1301) fährt, den dritten Zielartikel entnimmt, den dritten Zielartikel zu einem Bestimmungsort transportiert und den dritten Zielartikel an einer Zwischenlagerposition am Bestimmungsort ablegt;
die vierte Ziel-Transportvorrichtung so konfiguriert ist, dass sie den vierten beweglichen Ziel-Träger (1302) als Reaktion auf die Transportanweisung zum Zielort transportiert; und
die Ziel-Behälter-Handhabungsvorrichtung (170) so konfiguriert ist, dass sie als Reaktion auf die Handhabungsanweisung den dritten Zielartikel aus der Zwischenlagerposition entnimmt und den dritten Zielartikel auf den vierten beweglichen Ziel-Träger (1302) ablegt, der von der vierten Ziel-Transportvorrichtung transportiert wird.

8. Lager-Planungssystem gemäß einem der Ansprüche 1 bis 7, bei dem
die bewegliche Regaleinheit mindestens eine Verbindungsschicht (130201) aufweist und ein in der Verbindungsschicht (130201) befindlicher Artikel durch die Zugriffsvorrichtung (140) oder durch die Behälter-Handhabungsvorrichtung (170) bedient werden kann; und
die bewegliche Regaleinheit ferner eine Nicht-Verbindungsschicht (130202) aufweist, die sich von der Verbindungsschicht (130201) unterscheidet, und ein in der Nicht-Verbindungsschicht (130202) befindlicher Artikel ausschließlich von der Behälter-Handhabungsvorrichtung (170) bedient wird;
wobei vorzugsweise
die Ziel-Behälter-Handhabungsvorrichtung (170) des Weiteren so konfiguriert ist, dass sie die Position eines Artikels auf der beweglichen Regaleinheit innerhalb der Verbindungsschicht (130201), innerhalb der Nicht-Verbindungsschicht (130202) oder zwischen der Verbindungsschicht (130201) und der Nicht-Verbindungsschicht (130202) wechselt.

9. Lager-Planungssystem gemäß einem der Ansprüche 1 bis 7, bei dem
die Artikel-Handhabungsvorrichtung des Weiteren dazu verwendet wird, die Lage der Artikel-Handhabungsvorrichtung entsprechend der Lagenabweichung anzupassen, um die Lagenabweichung zu beseitigen.

10. Lager-Planungssystem gemäß einem der Ansprüche 1 bis 7, bei dem sich die Ziel-Behälter-Handhabungsvorrichtung (170) an der Arbeitsstation (160) befindet, eine Förderlinie an der Arbeitsstation (160) angeordnet ist, sich eine Kommissionierarbeitsposition in einem Transportweg der Transportlinie befindet, die Transportlinie einen Transportlinien-Einlass und einen Transportlinien-Auslass aufweist und die Ziel-Behälter-Handhabungsvorrichtung (170) sowohl am Transportlinien-Einlass als auch am Transportlinien-Auslass angeordnet ist;
die am Einlass der Förderleitung angeordnete Ziel-Behälter-Handhabungsvorrichtung (170) des Weiteren so konfiguriert ist, dass sie den ersten Zielartikel aus der aktuellen Lagerposition entnimmt und den ersten Zielartikel auf die Förderleitung ablegt; und
die am Auslass der Förderlinie angeordnete Ziel-Behälter-Handhabungsvorrichtung (170) des Weiteren so konfiguriert ist, dass sie den ersten Zielartikel aus dem Auslass der Förderlinie entnimmt und den ersten Zielartikel an der Zielposition ablegt, wobei die Zielposition die Lagerposition im ersten beweglichen Ziel-Träger (1302) oder die Lagerposition in einem anderen beweglichen Träger (1302) als dem ersten beweglichen Ziel-Träger (1302) ist.

11. Lager-Planungssystem gemäß einem der Ansprüche 1 bis 7, bei dem
der bewegliche Träger (1302) eine bewegliche Regaleinheit ist, die bewegliche Regaleinheit mindestens eine Einlegebodenplatte (13022) aufweist, die mindestens eine Einlegebodenplatte (13022) die bewegliche Regaleinheit in mindestens zwei Ebenen unterteilt und mindestens eine Lagerposition auf der Einlegebodenplatte (13022) der beweglichen Regaleinheit angeordnet ist;
vorzugsweise wobei
die bewegliche Regaleinheit eine beidseitige Regaleinheit ist;
der Steuerungsserver (110) des Weiteren so konfiguriert ist, dass er feststellt, dass sich die aktuelle Lagerposition und die Zielposition des ersten Zielartikels auf gegenüberliegenden Seiten der ersten beweglichen Ziel-Regaleinheit befinden, und eine Regaleinheiten-Umkehranweisung an die Ziel-Transportvorrichtungen (150) sendet;
die Ziel-Transportvorrichtungen (150) des Weiteren so ausgelegt sind, dass sie die erste bewegliche Ziel-Regaleinheit transportieren, um als Reaktion auf die Regaleinheiten-Umkehranweisung einen Regaleinheiten-Umkehrvorgang durchzuführen, nachdem die Ziel-Behälter-Handhabungsvorrichtung (170) den ersten Zielartikel entnommen hat; und
die Ziel-Behälter-Handhabungsvorrichtung (170) des Weiteren so ausgelegt ist, dass sie den Zielartikel an der Zielposition ablegt.

12. Lager-Planungssystem nach Anspruch 5, bei dem die ortsfeste Regaleinheit (1301) und eine die ortsfeste Regaleinheit (1301) tragende Auflagefläche gemeinsam einen Aufnahmebereich (21) definieren und der Aufnahmebereich (21) so ausgebildet ist, dass er den beweglichen Träger (1302) aufnimmt;
die Zugriffsvorrichtung (140) so ausgelegt ist, dass sie einen Artikel zwischen der ortsfesten Regaleinheit (1301) und dem beweglichen Träger (1302) transportiert; und
die erste Ziel-Transportvorrichtung (150) des Weiteren so ausgelegt, dass sie: einen Artikel vom beweglichen Träger (1302) wegtransportiert oder einen Artikel auf den beweglichen Träger (1302) transportiert; und/oder den beweglichen Träger (1302) aus dem Aufnahmebereich (21) wegtransportiert oder den beweglichen Träger (1302) in den Aufnahmebereich (21) transportiert;
wobei vorzugsweise
der bewegliche Träger (1302) eine erste Halterung (11) und ein auf der ersten Halterung (11) angeordnetes Kammzahnelement (12) aufweist, und das Kammzahnelement (12) so ausgebildet ist, dass es einen Artikel trägt; und
die erste Ziel-Transportvorrichtung (150) so konfiguriert ist, dass sie: unterhalb des Kammzahnelements (12) vorbeifährt und durch einen Zwischenraum zwischen zwei benachbarten Kammzähnen des Kammzahnelements (12) hindurchfährt, um einen Artikel auf dem Kammzahnelement (12) anzuheben und den Artikel wegzutragen; oder die erste Ziel-Transportvorrichtung (150) so konfiguriert ist, dass sie: mit einem Artikel in einen Zwischenraum zwischen zwei benachbarten Kammzähnen einfährt, den Artikel auf das Kammzahnelement (12) absetzt und wieder herausfährt.

13. Lager-Planungssystem nach Anspruch 5, bei dem
die ortsfeste Regaleinheit (1301) und eine die ortsfeste Regaleinheit (1301) tragende Auflagefläche gemeinsam einen Aufnahmebereich (21) definieren und der Aufnahmebereich (21) so ausgebildet ist, dass er den beweglichen Träger (1302) aufnimmt;
die Zugriffsvorrichtung (140) so konfiguriert ist, dass sie einen Artikel zwischen der ortsfesten Regaleinheit (1301) und dem beweglichen Träger (1302) transportiert;
die erste Ziel-Transportvorrichtung (150) des Weiteren so ausgelegt ist, dass sie: einen Artikel vom beweglichen Träger wegtransportiert oder einen Artikel auf den beweglichen Träger (1302) transportiert; und/oder den beweglichen Träger (1302) aus dem Aufnahmebereich (21) wegtransportiert oder den beweglichen Träger (1302) in den Aufnahmebereich (21) transportiert;
der bewegliche Träger (1302) eine erste Halterung (11) und ein auf der ersten Halterung (11) angeordnetes Kammzahnelement (12) aufweist, wobei das Kammzahnelement (12) so ausgebildet ist, dass es einen Artikel trägt;
die erste Ziel-Transportvorrichtung (150) so konfiguriert ist, dass sie: unterhalb des Kammzahnelements (12) vorbeiläuft und durch einen Zwischenraum zwischen zwei benachbarten Kammzähnen des Kammzahnelements (12) hindurchläuft, um einen Artikel auf dem Kammzahnelement (12) anzuheben und den Artikel wegzutragen; oder die erste Ziel-Transportvorrichtung (150) ist so ausgelegt, dass sie: mit einem Artikel in einen Zwischenraum zwischen zwei benachbarten Kammzähnen einfährt, den Artikel auf das Kammzahnelement (12) absetzt und wieder herausfährt; und
die erste Ziel-Transportvorrichtung (150) aufweist:
einen zweiten Körper;
einen zweiten Laufmechanismus, wobei der zweite Laufmechanismus an dem zweiten Körper angeordnet ist und dazu ausgelegt ist, den zweiten Körper zum Laufen anzutreiben; und
eine Aufnahmeschale, wobei die Aufnahmeschale beweglich an dem zweiten Körper angeordnet ist und dazu ausgelegt ist: sich relativ zu dem zweiten Körper anzuheben und einen Zwischenraum zwischen zwei benachbarten Kammzähnen des Kammzahnelements (12) zu durchlaufen, um einen Artikel anzuheben, oder sich relativ zu dem zweiten Körper abzusenken und einen auf der Aufnahmeschale befindlichen Artikel auf das Kammzahnelement (12) abzulegen;
wobei vorzugsweise
die erste Ziel-Transportvorrichtung (150) des Weiteren aufweist:
einen Hubmechanismus, wobei ein unteres Ende des Hubmechanismus am zweiten Körper angeordnet ist, die Aufnahmeschale an einem oberen Ende des Hubmechanismus angeordnet ist und der Hubmechanismus so ausgelegt ist, dass er die Aufnahmeschale antreibt, um es relativ zum zweiten Körper anzuheben; und
einen Antriebsmotor, wobei der Antriebsmotor so ausgelegt ist, dass er den Hubmechanismus antreibt, um die Aufnahmeschale relativ zum zweiten Körper anzuheben.

14. Lager-Planungsverfahren, wobei das Verfahren auf ein Lager-Planungssystem angewendet wird, das System einen Steuerungsserver (110), eine Zugriffsvorrichtung (140), eine Transportvorrichtung (150), einen Lagerbereich (120) und eine Behälter-Handhabungsvorrichtung (170) aufweist, der Lagerbereich (120) mindestens eine Vielzahl von ortsfesten Regaleinheiten (1301) und eine Vielzahl von beweglichen Trägern (1302) aufweist; jede ortsfeste Regaleinheit (1301) mindestens eine Trennwand aufweist; die mindestens eine Trennwand die ortsfeste Regaleinheit (1301) in mindestens zwei Ebenen unterteilt; jeder bewegliche Träger (1302) sich in einer unteren Ebene der ortsfesten Regaleinheit (1301) befindet; mindestens eine Lagerposition an der Trennwand der ortsfesten Regaleinheit (1301) angeordnet ist und jede Lagerposition mindestens einen Artikel aufnehmen kann; und der bewegliche Träger (1302) mindestens eine Aufbewahrungsposition aufweist, wobei jede Aufbewahrungsposition mindestens einen Artikel aufnehmen kann und der Artikel, den die Aufbewahrungsposition aufnehmen kann, einen Behälter aufweist; und
das Verfahren aufweist:
Ermitteln, durch den Steuerungsserver (110) gemäß einer Auftragsaufgabe, einer ortsfesten Ziel-Regaleinheit (1301), auf der sich derzeit ein Zielbehälter befindet, der eine Auftragsware aufnimmt, sowie eines beweglichen Ziel-Trägers (1302), auf den der Zielbehälter abgesetzt werden soll, wobei der bewegliche Ziel-Träger (1302) eine Lagerposition aufweist, die dazu dient, das Anordnen des Zielbehälters darauf zu ermöglichen, Ermitteln, durch den Steuerungsserver (110), einer Ziel-Zugriffsvorrichtung (140), die zum Zugriff auf den Zielbehälter dient, sowie einer Ziel-Transportvorrichtung (150), die zum Transport des beweglichen Ziel-Trägers (1302) dient, sowie eine Ziel-Frachtkasten-Handhabungsvorrichtung, die zum Handhaben des Ziel-Frachtkastens dient, Senden einer Zugriffsanweisung durch den Steuerungsserver (110) an die Ziel-Zugriffsvorrichtung (140), Senden einer Transportanweisung durch den Steuerungsserver (110) an die Ziel-Transportvorrichtung (150) und Senden einer Handhabungsanweisung durch den Steuerungsserver (110) an die Ziel-Frachtkasten-Handhabungsvorrichtung;
als Reaktion auf die Zugriffsanweisung, Bewegen der Ziel-Zugriffsvorrichtung (140) zur ortsfesten Ziel-Regaleinheit (1301) und Entnehmen durch die Ziel-Zugriffsvorrichtung (140) des Zielbehälters aus der ortsfesten Ziel-Regaleinheit (1301) und Ablegen, durch die Ziel-Zugriffsvorrichtung (140) des Zielbehälters an einer Lagerposition im beweglich Ziel-Träger (1302) oder Entnehmen, durch die Ziel-Zugriffsvorrichtung (140), des Zielbehälters aus einer Lagerposition im beweglichen Ziel-Träger (1302) und Ablegen, durch die Ziel-Zugriffsvorrichtung (140), des Zielbehälters, an einer Lagerposition in der ortsfesten Ziel-Regaleinheit (1301);
Transportieren des beweglichen Ziel-Trägers (1302), auf dem der Zielbehälter platziert ist, durch die Ziel-Transportvorrichtung (150), zu einem Bestimmungsort als Reaktion auf die Transportanweisung; und
als Reaktion auf die Handhabungsanweisung Entnehmen eines Zielbehälters aus dem von der Zieltransportvorrichtung (150) transportierten beweglichen Ziel-Träger (1302) mittels der am Zielort befindlichen Ziel-Behälter-Handhabungsvorrichtung (170) oder Ablegen eines Zielbehälters auf den von der Zieltransportvorrichtung (150) transportierten beweglichen Ziel-Träger (1302) mittels der Ziel-Behälter-Handhabungsvorrichtung (170);
**dadurch gekennzeichnet, dass**
die Ziel-Behälter-Handhabungsvorrichtung (170) einen Regalkörper (7) aufweist, der Regalkörper (7) mit einer Artikelzugriffsanordnung (2) und einer Lageranordnung versehen ist und die Artikelzugriffsanordnung (2) so konfiguriert ist, dass sie sich auf dem Regalkörper (7) bewegt; und der Regalkörper (7) eine X-Achsen-Führung (71) und eine Y-Achsen-Führung (72) aufweist, die senkrecht zueinander stehen;
das Lager-Planungsverfahren des Weiteren aufweist:
Entnehmen eines Artikels durch die Artikelzugriffseinheit (2) aus einem beweglichen Träger (1302) in einer Z-Achsen-Richtung, die sowohl senkrecht zur X-Achsen-Führung (71) als auch zur Y-Achsen-Führung (72) verläuft, und Ablegen des Artikels durch die Artikelzugriffseinheit (2) des Artikels auf die Lageranordnung oder Entladen eines Artikels von der Lageranordnung durch die Artikelzugriffseinheit (2) und Ablegen des Artikels auf dem beweglichen Träger (1302) durch die Artikelzugriffseinheit (2);
wobei der bewegliche Träger (1302) eine bewegliche Regaleinheit ist, die bewegliche Regaleinheit mindestens eine Einlegebodenplatte (13022) aufweist, die mindestens eine Einlegebodenplatte (13022) die bewegliche Regaleinheit in mindestens zwei Ebenen unterteilt und mindestens eine Lagerposition auf der Einlegebodenplatte (13022) der beweglichen Regaleinheit angeordnet ist; und die Behälter-Handhabungsvorrichtung (170) einen ersten Sensor und einen zweiten Sensor aufweist;
das Lager-Planungsverfahren des Weiteren aufweist:
Ermitteln mittels des ersten Sensors, ob sich ein Artikel an einer Lagerposition in der beweglichen Regaleinheit befindet, wenn die Behälter-Handhabungsvorrichtung (170) einen Artikel aus der beweglichen Regaleinheit entnehmen soll, und/oder Ermitteln mittels des ersten Sensors, ob eine Lagerposition in der beweglichen Regaleinheit leer ist, wenn die Behälter-Handhabungsvorrichtung (170) einen Artikel an der Lagerposition in der beweglichen Regaleinheit ablegen soll;
Ermitteln einer Lageabweichung zwischen der Behälter-Handhabungsvorrichtung (170) und einem Behälter auf der beweglichen Regaleinheit mittels des zweiten Sensors; und
Anpassen einer Lage der Behälter-Handhabungsvorrichtung (170) durch die Behälter-Handhabungsvorrichtung (170) entsprechend einer Lageabweichung zwischen der Behälter-Handhabungsvorrichtung (170) und einer durch den zweiten Sensor ermittelten entsprechenden Artikelposition, falls die Lageabweichung größer oder gleich einem voreingestellten Toleranzschwellenwert ist, um die Lageabweichung unter den voreingestellten Toleranzschwellenwert zu bringen.

15. Lager-Planungsverfahren gemäß Anspruch 14, bei dem das Verfahren des Weiteren aufweist:
Anweisen, durch den Steuerungsserver (110), der Zugriffsvorrichtung (140), eine Position eines ersten Zielartikels zwischen Lagerpositionen in der ortsfesten Regaleinheit (1301) zu wechseln, und Anweisen, durch den Steuerungsserver (110), der Zugriffsvorrichtung (140) derart, dass sie die Position des ersten Zielartikels zwischen der Lagerposition in der ortsfesten Regaleinheit (1301) und der Lagerposition im beweglichen Träger (1302) wechselt; und/oder Anweisen, durch den Steuerungsserver (110), der Behälter-Handhabungsvorrichtung (170), die Position des ersten Zielartikels zwischen Lagerpositionen im beweglichen Träger (1302) zu wechseln; oder
das Verfahren des Weiteren aufweist:
als Reaktion auf einen Sortierauftrag, Anweisen, durch den Steuerungsserver (110), der Zugriffsvorrichtung (140), den ersten Zielartikel von einer ursprünglichen Lagerposition in der ortsfesten Regaleinheit (1301) an eine andere Lagerposition in der ortsfesten Regaleinheit (1301) zu verlagern oder den ersten Zielartikel an der ursprünglichen Lagerposition zu belassen;
Anweisen, durch den Steuerungsserver (110), der Zugriffsvorrichtung (140), den ersten Zielartikel von einer ursprünglichen Lagerposition in der ortsfesten Regaleinheit (1301) an eine andere Lagerposition im beweglichen Träger (1302) zu verlagern; Anweisen, durch den Steuerungsserver (110), der Zugriffsvorrichtung (140), den ersten Zielartikel von einer ursprünglichen Lagerposition im beweglichen Träger (1302) in eine andere Lagerposition im ortsfesten Regalsystem (1301) zu verlagern; und/oder Anweisen, durch den Steuerungsserver (110), der Behälter-Handhabungsvorrichtung (170), den ersten Zielartikel von einer ursprünglichen Lagerposition im beweglichen Träger (1302) in eine andere Lagerposition im beweglichen Träger (1302) zu verlagern oder den ersten Zielartikel an der ursprünglichen Lagerposition im beweglichen Träger (1302) zu belassen.

## Revendications

1. Système de planification d'entrepôt, ledit système comprenant un serveur de contrôle (110), un dispositif de transport (150), une zone de stockage (120) et un dispositif de manutention de conteneurs (170), la zone de stockage (120) comportant au moins une pluralité de supports mobiles (1302), chaque support mobile (1302) comportant au moins une position de stockage et chaque position de stockage pouvant accueillir au moins un article;
le serveur de contrôle (110) configuré est pour: déterminer un premier article de destination sur un premier mobile support de destination (1302), ainsi qu'une position de stockage actuelle et une position de destination du premier article de destination; déterminer un dispositif de transport de destination (150) utilisé pour transporter le premier mobile support de destination (1302), ainsi qu'un dispositif de manutention de conteneurs de destination (170), envoyer une instruction de transport au premier dispositif de transport de destination (150) et envoyer une instruction de manutention au dispositif de manutention de conteneurs de destination (170);
le premier dispositif de transport de destination (150) est configuré pour transporter le premier mobile support de destination (1302), sur lequel est placé le premier article de destination, vers un lieu de destination en réponse à l'instruction de transport;
le dispositif de manutention de conteneurs de destination (170) est situé à la destination et est configuré pour, en réponse à l'instruction de manutention, retirer le premier article de destination de sa position de stockage actuelle et le déposer à la position de destination;
**caractérisé en ce que**
le dispositif de manutention de conteneurs (170) comporte un corps de rayonnage (7), le corps de rayonnage (7) étant muni d'une unité d'accès aux articles (2) et d'une unité de stockage, et l'unité d'accès aux articles (2) étant conçue pour se déplacer sur le corps de rayonnage (7); le corps de rayonnage (7) comporte un guidage selon l'axe X (71) et un guidage selon l'axe Y (72), qui sont perpendiculaires l'un à l'autre; et l'unité d'accès aux articles (2) est conçue pour prélever un article d'un support mobile (1302) dans une direction de l'axe Z, perpendiculaire à la fois au guidage de l'axe X (71) et au guidage de l'axe Y (72), et de déposer l'article sur l'unité de stockage ou de décharger un article de l'unité de stockage et de déposer l'article sur le support mobile (1302);
le support mobile (1302) est une unité de rayonnage mobile, ladite unité de rayonnage mobile comportant au moins une tablette (13022), ladite au moins une tablette (13022) divisant l'unité de rayonnage mobile en au moins deux plans, et au moins une position de stockage est agencée sur la tablette (13022) de l'unité de rayonnage mobile;
le dispositif de manutention de conteneurs (170) comporte un premier capteur, et ce premier capteur à sert déterminer si un article se trouve dans une position de stockage au sein du système de rayonnage mobile lorsque le dispositif de manutention de conteneurs (170) doit prélever un article du système de rayonnage mobile, et/ou pour déterminer si une position de stockage dans le système de rayonnage mobile est vide lorsque le dispositif de manutention de conteneurs (170) doit déposer un article à cette position de stockage dans le système de rayonnage mobile;
le dispositif de manutention de conteneurs (170) comporte en outre un deuxième capteur, et ce deuxième capteur est utilisé pour déterminer un écart de position entre le dispositif de manutention de conteneurs (170) et un conteneur situé sur l'unité de rayonnage mobile; et
le dispositif de manutention de conteneurs (170) est en outre utilisé pour ajuster la position du dispositif de manutention de conteneurs (170) en fonction d'un écart de position entre le dispositif de manutention de conteneurs (170) et une position d'article correspondante détectée par le deuxième capteur, lorsque l'écart de position est supérieur ou égal à un seuil de tolérance prédéfini, afin de ramener l'écart de position en dessous dudit seuil de tolérance prédéfini.

2. Système de planification d'entrepôt selon la revendication 1, dans lequel la position de destination est une position de stockage dans premier support de destination (1302); et le support de destination (1302) ou une position de stockage dans un autre mobile support (1302) que le premier mobile support comprend l'article que l'emplacement de stockage peut accueillir un conteneur, et le serveur de contrôle (110) est en outre configuré pour déterminer un nouvel emplacement de stockage pour un premier conteneur de destination, sur la base d'un critère quelconque choisi parmi le groupe comprenant la popularité d'une marchandise stockée dans le premier conteneur de destination, le degré de corrélation entre la marchandise stockée dans le premier conteneur de destination et une marchandise stockée dans un autre conteneur, la question de savoir si une tâche à traiter concerne la marchandise stockée dans le premier conteneur de destination, ainsi que les distances entre un dispositif de manutention de conteneurs de destination (170) et des emplacements de stockage dans des supports mobiles (1302) situés à une destination.

3. Système de planification d'entrepôt selon la revendication 1, dans lequel la position de destination est une position de stockage dans un support mobile (1302) autre que le premier support mobile de destination (1302) et la position de destination est une position de stockage dans un deuxième mobile support de destination (1302);
le serveur de contrôle (110) est en outre configuré pour: déterminer un emplacement de stockage dans le deuxième mobile support de destination (1302) pour le premier article de destination, déterminer le deuxième dispositif de transport de destination utilisé pour transporter une mobile support de destination (1302), et envoyer une instruction de transport au deuxième dispositif de transport de destination;
le deuxième dispositif de transport de destination est configuré pour transporter le deuxième mobile support de destination (1302) vers un lieu de destination, en réponse à l'instruction de transport; et
le dispositif de manutention de conteneurs de destination (170) est en outre configuré pour, en réponse à l'instruction de manutention, retirer le premier article de destination d'une position de stockage actuelle dans le premier mobile support de destination (1302) déposer le premier article de destination à la position de stockage dans le deuxième mobile support de destination (1302).

4. Système de planification d'entrepôt selon la revendication 1, dans lequel le serveur de contrôle (110) est en outre configuré pour: identifier un deuxième article de destination situé dans une zone de traitement, et un emplacement de stockage dans un troisième mobile support de destination (1302), identifier un troisième dispositif de transport de destination utilisé pour transporter le troisième mobile support de destination (1302), envoyer une instruction de transport au troisième dispositif de transport de destination et envoyer une instruction de manutention au dispositif de manutention de conteneurs de destination (170);
le troisième dispositif de transport de destination est conçu pour transporter le troisième mobile support de destination (1302) vers la zone de manutention, en réponse à l'instruction de transport; et
le dispositif de manutention de conteneurs de destination (170) se trouve dans la zone de manutention et est conçu pour, en réponse à l'instruction de manutention, prélever le deuxième article de destination de la zone de manutention et déposer le deuxième article de destination à la position de stockage dans le troisième mobile support de destination (1302);
dans lequel, de préférence,
le serveur de contrôle (110) est en outre conçu pour déterminer, en réponse à au moins une tâche choisie parmi le groupe constitué d'une tâche de prélèvement, d'une tâche de tri et d'une tâche de stockage, un nouvel emplacement de stockage pour le deuxième article de destination.

5. Système de planification d'entrepôt selon la revendication 1, dans lequel le système en outre comprend un dispositif d'accès (140) et une pluralité d'unités de rayonnage fixes (1301), chaque unité de rayonnage fixe (1301) comportant au moins une cloison de séparation, ladite au moins une cloison de séparation divisant l'unité de rayonnage fixe (1301) en au moins deux niveaux, le support mobile (1302) se trouvant dans l'un des niveaux inférieurs de l'unité de rayonnage fixe (1301), au moins un emplacement de stockage étant disposé au niveau de la cloison de l'unité de rayonnage fixe (1301) et chaque emplacement de stockage pouvant accueillir au moins un article.

6. Système de planification d'entrepôt selon la revendication 5, dans lequel la position de destination est une position de stockage intermédiaire au niveau (160) d'un poste de travail;
le serveur de contrôle (110) est configuré pour: déterminer un emplacement de stockage dans une en outre unité de rayonnage fixe de destination (1301) pour le premier article de destination, déterminer un dispositif d'accès de destination (140) utilisé pour accéder au premier article de destination, et envoyer une instruction d'accès au dispositif d'accès de destination (140);
le dispositif de manutention de conteneurs de destination (170) est en outre configuré pour, en réponse à l'instruction de manutention, prélever le premier article de destination de la position de stockage actuelle et déposer le premier article destination à la position de stockage intermédiaire; et
le dispositif d'accès de destination (140) est configuré de manière à, en réponse l'instruction d'accès, se déplacer vers la position de stockage intermédiaire, à prélever le premier article de destination de la position de stockage intermédiaire, se déplacer l'unité de rayonnage de destination (1301) et déposer le premier article de destination dans une position de stockage à l'unité de rayonnage fixe de destination (1301).

7. Système de planification d'entrepôt selon la revendication 5, dans lequel la position de destination est une position de stockage intermédiaire au niveau (160) d'un poste de travail;
le serveur de contrôle (110) est en outre configuré pour: déterminer un troisième article de destination sur une unité de rayonnage fixe de destination (1301), déterminer une position de stockage actuelle pour le troisième article de destination ainsi qu'une position de stockage dans un quatrième mobile support de destination (1302) pour le troisième article de destination, déterminer un dispositif d'accès de destination (140) utilisé pour accéder au troisième article destination et un quatrième dispositif de transport de destination utilisé pour transporter le quatrième mobile support de destination (1302); envoyer une instruction d'accès au dispositif d'accès de destination (140), envoyer une instruction de transport au quatrième dispositif de transport de destination et envoyer une instruction de manutention au dispositif de manutention de conteneurs de destination (170);
le dispositif d'accès de destination (140) est configuré pour, en réponse à l'instruction d'accès, se déplacer l'unité de rayonnage fixe de destination (1301), prélever le troisième article de destination, transporter le troisième article de destination vers un lieu de destination et déposer le troisième article de destination dans une position de stockage intermédiaire au lieu de destination;
le quatrième dispositif de transport de destination est configuré pour, en réponse à l'instruction de transport, transporter le quatrième mobile support de destination (1302) vers le lieu de destination; et
le dispositif de manutention de conteneurs de destination (170) est configuré pour, en réponse à l'instruction de manutention, prélever le troisième article de destination de l'emplacement de stockage intermédiaire et déposer le troisième article de destination sur le quatrième mobile support de destination (1302), qui est transporté par le quatrième dispositif de transport de destination.

8. Système de planification d'entrepôt selon l'une des revendications 1 à 7, dans lequel l'unité de rayonnage mobile comporte au moins une couche de liaison (130201) et un article situé dans la couche de liaison (130201) être manipulé par le dispositif d'accès (140) ou par le dispositif de manutention de conteneurs (170); et
l'unité de rayonnage mobile comporte en outre une couche non de liaison (130202), qui se distingue de la couche de liaison (130201), et un article situé dans la couche non de liaison (130202) est manipulé exclusivement par le dispositif de manutention de conteneurs (170);
de préférence
le dispositif de manutention de conteneurs de destination (170) est en outre configuré pour déterminer la position d'un article sur l'unité de rayonnage mobile à l'intérieur de la couche de liaison (130201), au sein de la couche non de liaison (130202) ou entre la couche de liaison (130201) et la couche non de liaison (130202).

9. Système de planification d'entrepôt selon l'une des revendications 1 à 7, dans lequel le dispositif de manutention d'articles en outre est utilisé pour ajuster la position du dispositif de manutention d'articles en fonction de l'écart de position, afin d'éliminer cet écart.

10. Système de planification d'entrepôt selon l'une des revendications 1 à 7, dans lequel le dispositif de manutention de conteneurs de destination (170) est situé au niveau du poste de travail (160), une ligne de convoyage est disposée au niveau du poste de travail (160), un poste de préparation de commande se trouve sur un trajet de transport de la ligne de transport, la ligne de transport comporte une entrée et une sortie, et le dispositif de manutention des conteneurs de destination (170) est disposé aussi bien à l'entrée qu'à la sortie de la ligne de transport;
le disposé à l'entrée de la ligne de transport dispositif de manutention des conteneurs de destination (170) est en outre configuré pour prélever le premier article de destination de la position de stockage actuelle et le déposer sur la ligne de transport;
le dispositif de manutention des conteneurs de destination (170) disposé à la sortie de la ligne de transport est en outre configuré pour prélever le premier article de destination à la sortie de la ligne de transport et déposer le premier article de destination à la position de destination, la position de destination étant la position de stockage dans le premier mobile support de destination (1302) ou la position de stockage dans un autre mobile support (1302) que le premier mobile support de destination (1302).

11. Système de planification d'entrepôt selon l'une des revendications 1 à 7, dans lequel
le support mobile (1302) est une unité de rayonnage mobile, l'unité de rayonnage mobile comporte au moins une tablette (13022), ladite au moins une tablette (13022) divise l'unité de rayonnage mobile en au moins deux plans et au moins une position de stockage est disposée sur la tablette (13022) de l'unité de rayonnage mobile;
de préférence,
l'unité de rayonnage mobile est une unité de rayonnage à double face;
le serveur de contrôle (110) est en outre configuré pour déterminer que la position de stockage actuelle et la position de destination du premier article de destination se trouvent sur des côtés opposés de la première unité de rayonnage mobile de destination et pour envoyer une instruction d'inversion d'unité de rayonnage aux dispositifs de transport de destination (150);
les dispositifs de transport de destination (150) sont en outre conçus pour transporter la première mobile unité de rayonnage afin en réponse à l'instruction d'inversion d'unité de rayonnage d'effectuer opération d'inversion d'unité de rayonnage, après le dispositif de manutention de conteneurs de destination (170) a prélevé le premier article de destination; et
le dispositif de manutention des conteneurs de destination (170) est en outre conçu pour déposer l'article de destination à la position de destination.

12. Système de planification d'entrepôt selon la revendication 5, dans lequel l'unité de rayonnage fixe (1301) et une surface d'appui supportant l'unité de rayonnage fixe (1301) définissent conjointement une zone de réception (21) et la zone de réception (21) est conçue pour recevoir le support mobile (1302);
le dispositif d'accès (140) est conçu pour transporter un article entre l'unité de rayonnage fixe (1301) et le support mobile (1302); et
le premier dispositif de transport de destination (150) est en outre conçu pour: éloigner un article du support mobile (1302) ou transporter un article vers le support mobile (1302); et/ou
éloigner le support mobile (1302) de la zone de réception (21) ou transporter support mobile (1302) vers la zone de réception (21);
dans laquelle, de préférence,
le support mobile (1302) comporte un premier support (11) et un élément à dents en peigne (12) disposé sur le premier support (11), et l'élément à dents en peigne (12) est conçu pour porter un article; et
le premier dispositif de transport de destination (150) est configuré de manière à: passer sous l'élément à dents en peigne (12) et traverser un espace entre deux dents adjacentes de l'élément à dents en peigne (12) afin de soulever un article sur l'élément à dents en peigne (12) et d'emporter cet article; ou le premier article dispositif de transport de destination (150) est configuré de manière à: pénétrer avec un article dans un espace entre deux dents adjacentes, déposer l'article sur l'élément à dents en peigne (12) et ressortir.

13. Système de planification d'entrepôt selon la revendication 5, dans lequel l'unité de rayonnage fixe (1301) et une surface d'appui supportant l'unité de rayonnage fixe (1301) définissent conjointement une zone de réception (21) et la zone de réception (21) est conçue pour recevoir le support mobile (1302);
le dispositif d'accès (140) est configuré de manière à transporter un article entre l'unité de rayonnage fixe (1301) et le support mobile (1302);
le premier dispositif de transport de destination (150) est en outre conçu pour: évacuer un article du support mobile ou transporter un article vers le support mobile (1302); et/ou évacuer le support mobile (1302) de la zone de réception (21) ou transporter le support mobile (1302) vers la zone de réception (21);
le support mobile (1302) comporte un premier support (11) et un élément à dents en peigne (12) disposé sur le premier support (11), l'élément à dents en peigne (12) étant conçu pour supporter un article;
le premier dispositif de transport de destination (150) est configuré de manière à: passer sous l'élément à dents en peigne (12) et traverser un espace entre deux dents adjacentes de l'élément à dents en peigne (12) afin soulever un article situé sur l' élément à dents en peigne (12) et d' emporter cet article; ou le premier article dispositif de transport de destination (150) est conçu pour: pénétrer avec un article dans un espace entre deux dents adjacentes, déposer l'article sur l'élément à dents en peigne (12) et ressortir; et
le premier dispositif de transport de destination (150) comprend:
un deuxième corps;
un deuxième mécanisme d'entraînement, ledit deuxième mécanisme d'entraînement étant disposé sur le deuxième corps et étant conçu pour entraîner le deuxième corps; et
un plateau de réception, ledit plateau de réception étant monté de manière mobile sur le deuxième corps et étant conçu pour: se soulever par rapport au deuxième corps et de passer dans l'espace entre deux dents adjacentes de l'élément à dents en peigne (12) afin soulever de un article, ou de s'abaisser par rapport au deuxième corps et de déposer un article se trouvant sur le plateau de réception sur l'élément à dents en peigne (12);
dans lequel, de préférence,
le premier dispositif de transport de destination (150) comprend en outre:
un mécanisme de levage, dont une extrémité inférieure est disposée sur le deuxième corps, le bac de réception étant disposé à une extrémité supérieure du mécanisme de levage, et le mécanisme de levage étant conçu pour entraîner le bac de réception afin de le soulever par rapport au deuxième corps; et
un moteur d'entraînement, ledit moteur d'entraînement étant conçu pour entraîner le mécanisme de levage afin de le soulever par rapport au deuxième corps.

14. Procéde de planification d'entrepôt, ledit procédé à un étant appliqué système planification d'entrepôt, ledit système comprenant un serveur de contrôle (110), un dispositif d'accès (140), un dispositif de transport (150), une zone de stockage (120) et un dispositif de manutention de conteneurs (170), la zone de stockage (120) comprenant au moins une pluralité d'unités de rayonnage fixes (1301) et une pluralité de supports mobiles (1302); chaque unité de rayonnage fixe (1301) comporte au moins une cloison; ladite au moins une cloison divise l'unité de rayonnage fixe (1301) en au moins deux niveaux; chaque support mobile (1302) se trouve dans un niveau inférieur de l'unité de rayonnage fixe (1301); au moins une position de stockage est agencée sur la cloison de l'unité de rayonnage fixe (1301) et chaque position de stockage recevoir au moins un article; et le support mobile (1302) comporte au moins une position de rangement, chaque position de rangement recevoir au moins un article, et l'article que la position de rangement peut recevoir comportant un conteneur; et
le procédé comprend:
la détermination, par le serveur de contrôle (110) conformément à une tâche de commande, d'une unité de rayonnage fixe de destination (1301) sur laquelle se trouve actuellement un conteneur de destination recevant une marchandise commandée, ainsi que d'un mobile support de destination (1302), sur lequel le conteneur de destination doit être déposé, le mobile support de destination (1302) comportant une position de stockage destinée le à permettre placement du conteneur de destination sur celui-ci, la détermination, par le serveur de contrôle (110), d'un dispositif d'accès de destination (140) servant à accéder au conteneur de destination, ainsi que d'un dispositif de transport destination (150) servant à transporter le mobile support de destination (1302), ainsi qu'un dispositif de manutention de caisse de fret de destination servant à manipuler la caisse de fret de destination, l'envoi d'une instruction d'accès par le serveur de contrôle (110) au dispositif d'accès de destination (140), l'envoi d'une instruction de transport par le serveur de contrôle (110) au dispositif de transport de destination (150) et l'envoi d'une instruction de manutention par le serveur de contrôle (110) au dispositif de manutention de la caisse de fret de destination;
en réponse à l'instruction d'accès, déplacement du dispositif d'accès de destination (140) vers l'unité de rayonnage fixe de destination (1301) et retrait, par le dispositif d'accès de destination (140), du conteneur de destination de l'unité de rayonnage fixe de destination (1301) et le dépôt, par le dispositif d'accès de destination (140), du conteneur de destination dans une position de stockage au sein du mobile support de destination (1302) ou retrait, par le dispositif d'accès de destination (140), du conteneur de destination depuis une position de stockage dans le mobile support destination (1302) et le dépôt, par le dispositif d'accès de destination (140), du conteneur de destination dans une position de stockage au sein de l'unité de rayonnage fixe de destination (1301);
le transport du mobile support de destination (1302), sur lequel est placé le conteneur de destination, par le dispositif de transport de destination (150), vers une destination en réponse à l'instruction de transport; et
en réponse à l'instruction de manutention, le retrait d'un conteneur de destination du mobile support de destination (1302) transporté par le dispositif de transport de destination (150) à l'aide du dispositif de manutention de conteneurs de destination (170) situé au lieu de destination, ou le dépôt d'un conteneur de destination sur le mobile support de destination (1302) transporté par le dispositif de transport de de destination (150) à l'aide du dispositif de manutention de conteneurs de destination (170);
**caractérisé en ce que**
le dispositif de manutention des conteneurs de destination (170) comporte un corps de rayonnage (7), le corps de rayonnage (7) est muni d'un dispositif d'accès aux articles (2) et d'un dispositif de stockage, et le dispositif d'accès aux articles (2) est configuré de manière à se déplacer sur le corps de rayonnage (7); et le corps de rayonnage (7) comporte un guidage selon l'axe X (71) et un guidage selon l'axe Y (72), qui sont perpendiculaires l'un à l'autre;
le procédé de planification d'entrepôt comprend en outre:
prélèvement d'un article par l'unité d'accès aux articles (2) à partir d'un support mobile (1302) dans une direction de l'axe Z, qui est perpendiculaire au guidage de l'axe X (71) et la fois au guidage de l'axe Y (72), et le dépôt de l'article par l'unité d'accès aux articles (2) sur le dispositif de stockage, ou le déchargement d'un article du dispositif de stockage par l'unité d'accès aux articles (2) et le dépôt de l'article sur le support mobile (1302) par l'unité d'accès aux articles (2);
le support mobile (1302) étant une unité de rayonnage mobile, ladite unité de rayonnage mobile comportant au moins une tablette (13022), ladite au moins une tablette (13022) divisant l'unité de rayonnage mobile en au moins deux plans, et au moins une position de stockage est agencée sur la tablette (13022) de l'unité de rayonnage mobile; et le dispositif de manutention de conteneurs (170) comporte un premier capteur et un deuxième capteur;
la procédure de planification d'entrepôt comprend en outre:
la détermination, à l'aide du premier capteur, de la présence d'un article dans une position de stockage de l'unité de rayonnage mobile lorsque le dispositif de manutention de conteneurs (170) doit prélever un article de l'unité de rayonnage mobile, et/ou déterminer, à l'aide du premier capteur, si un emplacement de stockage dans l'unité de rayonnage mobile est vide, lorsque le dispositif de manutention de conteneurs (170) doit déposer un article à cet emplacement de stockage dans l'unité de rayonnage mobile;
la détermination d'un écart de position, à l'aide du deuxième capteur, entre le dispositif de manutention de conteneurs (170) et un conteneur situé sur l'unité de rayonnage mobile; et
l'ajustement la position du dispositif de manutention de conteneurs (170) par le dispositif de manutention de conteneurs (170) en fonction d'un écart de position entre le dispositif de manutention de conteneurs (170) et d'une position d'article correspondante détectée par le deuxième capteur, si l'écart de position est supérieur ou égal à une valeur seuil de tolérance prédéfinie, afin de ramener l'écart de position en dessous de ladite valeur seuil de tolérance prédéfinie.

15. Procédé de planification d'entrepôt selon la revendication 14, dans lequel le procédé comprend en outre:
l'instruction, par le serveur de contrôle (110), au dispositif d'accès (140), de changer la position d'un premier article de destination entre des positions de stockage dans l'unité de rayonnage fixe (1301), et l'instruction, par le serveur de contrôle (110), au dispositif d'accès (140) de manière à ce qu'il change la position du premier article de destination entre la position de stockage dans l'unité de rayonnage (1301) et la position de stockage dans le support mobile (1302);
et/ou l'instruction, par le serveur de contrôle (110), au dispositif de manutention de conteneurs (170) de changer la position du premier article de destination entre des emplacements de stockage au support mobile (1302); ou
le procédé comprenant en outre:
en réponse à une commande de tri, donner l'instruction, par l'intermédiaire du serveur de contrôle (110), le dispositif d'accès (140) de déplacer le premier article de destination d'un emplacement de stockage d'origine dans l'unité de rayonnage fixe (1301) ou de laisser le premier article de destination à son emplacement de stockage d'origine;
donner l'instruction, par l'intermédiaire du serveur de contrôle (110), au dispositif d'accès (140), de déplacer le premier article de destination d'un emplacement de stockage d'origine dans l'unité de rayonnage fixe (1301) vers un autre emplacement de stockage dans le support mobile (1302); donner l'instruction, par l'intermédiaire du serveur de contrôle (110), du dispositif d'accès (140) de déplacer le premier article de destination d'une position de stockage initiale dans le support mobile (1302) vers une autre position de stockage dans le système de rayonnage fixe (1301); et/ou donner l'instruction, par l'intermédiaire du serveur de contrôle (110), au dispositif de manutention de conteneurs (170), de déplacer le premier article de destination d'une position de stockage initiale dans le support mobile (1302) vers une autre position de stockage dans le support mobile (1302) ou laisser le premier article de destination à sa position de stockage initiale dans le support mobile (1302).
